# EUROPEAN PATENT APPLICATION

(11) **EP 4 650 852 A1**
(43) Date of publication of application: **19.11.2025**
(21) Application number: 24176282.2
(22) Date of filing: 16.05.2024
(51) Int. Cl.: G02B 21/00, G02B 21/24, G02B 21/28

(54) **APPARATUS AND METHOD OF USE OF THE APPARATUS FOR HOLDING A SAMPLE TO BE OPTICALLY INSPECTED VIA AN OPTICAL MICROSCOPE WHILST MAINTAINING THE SAMPLE AT CRYOGENIC TEMPERATURES**

(71) Applicant: The Provost, Fellows, Foundation Scholars, & the other members of Board, of the College of the Holy & Undiv. Trinity of Queen Elizabeth near Dublin, Dublin 2 (IE)
(72) Inventor: HEGNER, Martin, Dublin 2 (IE); SKOKO, Dunja, Dublin 2 (IE); SKOKO, Radivoje, Belgrade (RS)
(74) Representative: Secerna LLP

(57) **Abstract**

Apparatus, a system and method of use are disclosed. The apparatus comprises a housing comprising a first end wall, a second end wall, spaced apart from the first end wall, and at least one side wall extending between the first end wall and the second end wall; an internal chamber in the housing comprising a first chamber region, for locating a sample to be optically inspected via an optical microscope, and a second chamber region, in fluid communication with the first chamber region, for holding a reservoir of liquid cryogen; a transparent window element in the housing for allowing a sample in the first chamber region to be optically inspected via an optical microscope and comprising an inner surface, facing the first chamber region, and an outer surface that is exposed to an exterior environment via an aperture that extends through the first end wall; at least one dry gas inlet at an outer surface of the housing, connectable to a supply of dry gas; at least one opening in the housing located adjacent the outer surface of the transparent window element and disposed around a central portion of the transparent window element; and at least one fluid communication passageway in the housing connecting the at least one dry gas inlet to the at least one opening for enabling distribution of dry gas across the outer surface of the transparent window element when dry gas is delivered to the at least one dry gas inlet.

## Description

The present invention relates to apparatus, a system, and a method of use of an apparatus for holding a sample to be optically inspected via an optical microscope whilst maintaining the sample at cryogenic temperatures. In particular, but not exclusively, the present invention relates to a cryogenic microscopy apparatus, for use with an inverted optical microscope, which provides for the targeted/directed distribution of dry gas across an outer surface of a transparent window (through which a sample is to be inspected via the inverted optical microscope) to help enable optical microscopy to be performed efficiently at cryogenic temperatures, by reducing or eliminating condensation formation on the window, mitigating cooling of objective lenses and enabling unhindered switching of objective lenses without losing optical quality.

It is known that cryogenic electron microscopy (cryo-EM) may provide valuable insights into materials or biological structures at the molecular level and nanometre scale (e.g., for determining the 3D structures of proteins at atomic or near-atomic resolution). For example, in biomedical fields, cryo-EM may be used to study cryogenically preserved biological materials and address questions about the precise shapes and arrangements of biological molecules, proteins, viruses, entire cells and parts of cells such as organelles. Cryo-EM may provide insights into how molecules interact with each other, their mechanisms of action, and how changes in their structures can affect their functions, which is useful for understanding biological processes and analysing the detailed structures of viruses, which aids in vaccine development and antiviral drug discovery. Cryo-EM may allow for the observation of frozen, hydrated biological samples in their near-natural state without the artifacts that might come from traditional sample preparation methods. This is because cryogenic preservation arrests all biological activity and biochemical reactions within biological materials by cooling them to ultra-low temperatures. Cryo-EM may also have applications in studying large biological complexes, such as ribosomes, spliceosomes, and membrane protein complexes, to understand the interactions within and between these complexes, and assisting in the discovery and design of new drugs by revealing how drugs interact with their biological targets at the molecular level. Furthermore, cryo-EM allows for visualising cellular components in situ, providing insights into cellular architecture and the spatial relationships between different cellular components, and studying the structural changes in cells and tissues associated with diseases, which can contribute to a better understanding of disease mechanisms. Moreover, cryo-EM can enable exploring the structure of neural circuits and synaptic complexes to understand the basis of neural functions and neurodegenerative diseases, and investigating the structure of soft materials, nanoparticles, and other nanoscale structures in materials science.

Despite its strengths in analysing isolated samples, cryo-EM faces challenges in crowded cellular environments due to its high resolution and magnification. The detailed images produced at such scales can make it difficult to distinguish specific structures of interest within the complex and dense matrix of biological materials. To navigate this limitation, cryogenic light microscopy (cryo-LM) may be employed for prior localisation, accurately identifying the locations of target structures. This preparatory step ensures that cryo-EM's powerful imaging capabilities are efficiently focused on precise areas within the cellular or tissue context, thus extending its application from isolated samples to the complex environments of cells. Cryo-LM uses a cryostage which is a component used to keep samples at extremely low (cryogenic) temperatures during examination or experimentation. A cryostage works by maintaining a stable and controlled cryogenic environment, typically using liquid nitrogen or helium, which can cool the stage to temperatures as low as -196°C or even lower.

Cryo-LM may enhance the cryo-EM workflow by ensuring that biological samples are well-preserved, that regions of interest are located, and that the overall process of obtaining ultrahigh-resolution images is more efficient and less damaging to the samples. For example, cryo-LM may enable the localisation and identification of fluorescently tagged structures or molecules within large and complex samples before they are imaged at higher resolutions with cryo-EM (thus reducing sample damage by allowing researchers to pinpoint areas of interest in a non-invasive manner and reducing the need for extensive sample manipulation or searching in the electron microscope, which can lead to sample damage and degradation). This is useful for efficiently finding areas of interest within the vast context of cellular environments. This synergy between light and electron microscopy is useful for advancing understanding of complex biological systems at both molecular and cellular levels. In addition, cryo-LM is a component of cryogenic correlative light and electron microscopy (cryo-CLEM) techniques, which combines the functional insight provided by fluorescent light microscopy with the high-resolution structural information obtained from cryo-EM. This correlation enables accurately mapping of the positions of specific proteins or structures within cells, enhancing the interpretation of cryo-EM data.

As discussed above, for biological samples, cryogenic fluorescence microscopy (cryo-FM) is a particularly useful type of cryogenic light microscopy. Cryo-FM takes advantage of low temperatures radically reducing chemical reactions that can irreversibly bleach fluorophores. By mitigating this photo-bleaching (which occurs when fluorescent labels on biological structures lose their ability to fluoresce after light exposure), cryogenic conditions can increase the photon budget from each fluorescent probe by orders of magnitude and improve signal-to-noise ratios compared to room temperature, enhancing localisation precision and resolution, and further increasing the resolution of all or most or many optical microscopes. Cryo-FM can thus provide targeting specificity via fluorescent tags labelling proteins or structures of interest. Correlating cryo-FM data with high-resolution cryo-EM imaging of the same specimen using cryo-CLEM thus allows precise mapping of fluorescently labelled components within the broader structural context. This empowers new investigations into direct structure-function relationships under close to native conditions. Apart from its use for cryo-CLEM, cryogenic fluorescence microscopy itself provides value as a stand-alone microscopy method. The ability to image labelled structures while retaining native hydration can reveal sensitive processes too unstable for other preparation methods.

Despite the potential of cryogenic light microscopy for ground-breaking discoveries in biomedical research, its widespread adoption remains limited. This is because cryo-LM presents a multitude of challenges. These challenges encompass various aspects of optical and mechanical constraints, sample safety, and operational complexities.

In light microscopy, there are two primary geometries: upright and inverted. In upright systems, the objective lens is held above the sample to be inspected. However, an inverted microscope has the objective lens below the sample. It is noted that the most advanced microscopes for cell biology, including but not limited to confocal and super-resolution types, are typically designed in an inverted configuration. This design choice is useful because it allows researchers easier visualisation to the sample from beneath since most cell types are closely attached to the bottom of the dishes that they are cultured in. However, both of these geometries suffer from problems when used for cryogenic imaging.

The challenges of cryo-LM in both geometries is generally due to the need for proximate positioning of the microscopy objective and frozen sample while conforming to the temperature constraints. In other words, the vitrified specimen should not heat up above -150 °C, while the microscopy objective should not freeze and/or collect ambient humidity due to cooling in proximity to the cryogenic compartment. This is difficult because the quality and resolution of the image depends on how close the sample and the objective are. Far positioning of objectives, such as with objectives with low numerical apertures, offers low optical resolution that is insufficient for most biological imaging.

Furthermore, in inverted systems particularly, a key issue arises from the thin glass window (typically made from a microscopy coverslip) that is positioned between the optical microscope objective and the cryogenic sample. Whilst commonly this is an issue with inverted systems, it will be appreciated that this issue is not limited to inverted systems and could apply to other systems that use a thin glass window, for example some upright systems. This glass window serves an important function: it provides optical access for the microscope's objective to the cryogenic compartment where the samples are housed, while keeping the samples under cryogenic conditions. Due to the cryogenic conditions within the devices that hold these samples, this cold window, exposed to ambient air, tends to accumulate humidity. This accumulation leads to condensation forming on the glass, which obstructs the imaging process. Moreover, in the inverted geometry, the proximity of the microscope objective to the cold parts of the instrument holding the cryogenic samples can result in the objective itself cooling down. This cooling further complicates the imaging efforts by affecting the optical and mechanical properties of the objective and potentially distorting the images captured. These factors collectively prevent effective imaging of cryogenic samples, limiting the usability of inverted microscopes in such environments.

To try and solve the problems in upright systems, some upright systems have the objective lens deeply inserted into the cryogenic environment through a narrow opening. This setup is important for preventing the entry of humid air from the environment into the cryogenic chamber. However, this means the part of the objective that is submerged in the cryogenic gas needs to be cooled to low temperatures. This cooling is necessary to avoid warming the vitrified samples. Changing the objectives during imaging using such upright systems is not straightforward and also presents significant technical challenges. Firstly, replacing the objectives could allow environmental humid air to enter the cryogenic chamber, leading to potential contamination of the vitrified sample. Secondly, the objective lens, being cooled, could be damaged when exposed to environmental conditions outside the cryogenic chamber. Lastly, introducing a new, room-temperature objective into the chamber could inadvertently inject a significant amount of heat into the cryogenic environment, adversely affecting the imaging process. Mechanical stability of such systems is another challenge, as thermal gradients and fluctuating temperatures within the cryogenic chamber can impact the microscope and sample stage, necessitating measures to mitigate drift and vibrations.

Turning to inverted systems, condensation of ambient humidity on the external glass surfaces of the window at the bottom of cryogenic microscopy devices fitted on inverted microscopes has been a major challenge, and an effective solution has not yet been established. To try and solve these problems, some inverted systems have used a sleeve around the microscope objective to block the passage of external air. However, the sleeve, not attached to the main body of the cryogenic device but bound to the objective, and the small gap between the sleeve and the cryostage body might not effectively prevent the influx of ambient air to the area between the objective and the glass window. As a result, condensation might slowly accumulate on the glass window, gradually impairing the clarity and reducing the feasible imaging time. Additionally, for high-quality imaging, the proximity of the objective to the cold glass and supporting cold structures means that the objective, closely positioned to the very cold glass in an area that is very cold, will gradually be cooled. Eventually, this might slowly accumulate condensation on the surface of the objective and could cause condensation within the objective, potentially irreversibly destroying it. Moreover, using a sleeve can disturb the mechanical stability of the cryogenic holder, which is essential for maintaining high precision required for imaging at micron and nanoscale levels. The use of a sleeve around the objective also prevents the use of several objectives during imaging. Since the sleeve around the objective is used to serve the purpose of blocking the ambient air from approaching the window, only one objective can be used during the entire imaging session. If the objective with the sleeve was removed to be replaced with another objective, that would cause exposure to the ambient air and cause accumulation of condensation on the glass window. Due to the limited space under the stage of the inverted microscopes and limited vertical movement of the objectives, it is difficult to have more than one sleeve at any time.

Currently, devices capable of facilitating high-resolution imaging on inverted microscopes (without condensation formation or objective lens cooling), with changeable objective lens, under cryogenic conditions are not commercially available.

It is an aim of the present invention to at least partly mitigate one or more of the above-mentioned problems.

It is an aim of certain embodiments of the present invention to provide apparatus for enabling cryogenic light microscopy by increasing photon yield.

It is an aim of certain embodiments of the present invention to provide apparatus for enabling cryogenic light microscopy with an optical microscope of an inverted configuration.

It is an aim of certain embodiments of the present invention to enable high-resolution cryogenic light microscopy.

It is an aim of certain embodiments of the present invention to provide apparatus that holds and maintains a sample at cryogenic temperatures (e.g., less than -150°C) whilst enabling efficient imaging due to the prevention of ice formation on a viewing window and the prevention of thermal cooling of microscope objectives.

It is an aim of certain embodiments of the present invention to provide targeted distribution of dry gas across a surface of a viewing window of a cryostage. The targeted distribution of dry gas provides a buffer region between the window and the external environment (and external components) which prevents condensation formation (by stopping ambient air from reaching the window) whilst acting as a thermal barrier between the cold window and the microscope objective (to mitigate thermal transfer).

It is an aim of certain embodiments of the present invention to provide targeted and dynamic distribution of dry gas across a viewing window of a cryostage to form a protective layer of dry gas specifically directed to create a continuous, unbroken barrier that isolates the window from ambient air, effectively preventing any air contact with the glass surface. The protective layer of dry gas so acts as a thermal barrier between the window surface and the objective lens, thereby preventing or reducing cooling of and/or condensation formation on the objective lens.

It is an aim of certain embodiments of the present invention to provide apparatus with internal fluid channels that can deliver dry gas to openings proximate a viewing window of the apparatus. This helps make the apparatus suitable with many different microscope setups.

It is an aim of certain embodiments of the present invention to reduce condensation on a glass window of a cryostage for use with a light microscope.

It is an aim of certain embodiments of the present invention to help maintain an objective lens at around ambient temperature while carrying out cryogenic light microscopy.

It is an aim of certain embodiments of the present invention to provide apparatus for allowing straightforward changing of an objective lens during imaging (in a similar way to which objectives are changed at room temperature). The ability to switch seamlessly between different magnification objectives enables efficient and effective analysis, allowing efficient location of an area of interest at lower magnification and then examination in detail at higher magnification without losing context or clarity. Prompt inspection for vitrified samples is particularly important due to their high sensitivity to contamination where extended imaging may expose these samples to environmental factors that can degrade their quality.

It is an aim of certain embodiments of the present invention to provide a cryostage for light microscopy which can be used with different makes and models of light microscope.

According to a first aspect of the present invention there is provided apparatus locatable on a stage of an optical microscope for holding a sample to be optically inspected via the optical microscope and maintaining the sample at cryogenic temperatures, comprising:
a housing comprising a first end wall, a second end wall, spaced apart from the first end wall, and at least one side wall extending between the first end wall and the second end wall;
an internal chamber in the housing comprising a first chamber region, for locating a sample to be optically inspected via an optical microscope, and a second chamber region, in fluid communication with the first chamber region, for holding a reservoir of liquid cryogen;
a transparent window element in the housing for allowing a sample in the first chamber region to be optically inspected via an optical microscope and comprising an inner surface, facing the first chamber region, and an outer surface that is exposed to an exterior environment via an aperture that extends through the first end wall;
at least one dry gas inlet at an outer surface of the housing, connectable to a supply of dry gas;
at least one opening in the housing located adjacent the outer surface of the transparent window element and disposed around a central portion of the transparent window element; and
at least one fluid communication passageway in the housing connecting the at least one dry gas inlet to the at least one opening for enabling distribution of dry gas across the outer surface of the transparent window element when dry gas is delivered to the at least one dry gas inlet.

Aptly, the at least one opening is formed as a gap between the outer surface of the transparent window element and the first end wall.

Aptly, the at least one opening comprises a singular opening extending around all of the central portion of the transparent window element or a plurality of openings disposed around the central portion of the transparent window element such that a targeted distribution of dry gas is provided across the outer surface of the transparent window element when dry gas is delivered to the at least one dry gas inlet.

Aptly, the at least one opening comprises a single annular opening extending around all of the central portion of the transparent window element.

Aptly, the at least one opening comprises a plurality of openings disposed around the central portion of the transparent window element and located in a rigid annular member.

Aptly, the at least one opening comprises a perforated screen extending around all of the central portion of the transparent window element.

Aptly, the at least one opening comprises at least one nozzle disposed around the central portion of the transparent window element and located in a rigid annular member.

Aptly, at least part of the at least one fluid communication passageway is located in the first end wall.

Aptly, the at least one fluid communication passageway comprises a first passageway portion and a second passageway portion,
the first passageway portion being parallel to an outer surface region of the first end wall and extending from the at least one dry gas inlet to the second passageway portion,
the second passageway portion comprising an annular fluid containing space connecting the first passageway portion to the at least one opening.

Aptly, the second passageway portion comprises an upper and lower fluid containing surface, wherein a distance between the upper and lower fluid containing surface continuously decreases in a direction towards the at least one opening.

Aptly, the lower fluid containing surface directs fluid flow such that dry gas is directed through the at least one opening and towards the outer surface of the transparent window element at an angle of between 10-75 degrees relative to the outer surface of the transparent window element when dry gas is delivered to the at least one dry gas inlet.

Aptly, the first end wall comprises a central recessed wall region that is sized and shaped for accommodating an end of an objective lens of an optical microscope.

Aptly, a centre of the central recessed wall region comprises the aperture through the first end wall through which the outer surface of the transparent window element is exposed to the exterior environment.

Aptly, the central recessed wall region comprises an outer surface portion resembling an inner surface of a dome.

Aptly, a lower fluid containing surface of a second passageway portion of the at least one fluid communication passageway is an inner surface of the central recessed wall region.

Aptly, the at least one dry gas inlet is located in the first end wall.

Aptly, the second chamber region comprises an annular channel extending around the first chamber region.

Aptly, the first chamber region and second chamber region are separated via at least one dividing wall.

Aptly, the dividing wall comprises at least one projecting portion at an end of the dividing wall that projects into the second chamber region for stopping droplets of liquid cryogen in the reservoir of liquid cryogen from travelling into the first chamber region.

Aptly, the apparatus further comprises at least one heating element arranged within the first end wall and/or the second end wall and/or the at least one side wall.

Aptly, the apparatus further comprises at least one adjustable element connected to the outer surface of the housing, for enabling a vertical position of the housing with respect to a stage of an optical microscope to be adjusted.

Aptly, the second end wall comprises at least one first aperture for providing liquid cryogen to the second chamber region.

Aptly, the second end wall comprises at least one second aperture through which a level of liquid cryogen in the second chamber region can be optically inspected.

Aptly, the second end wall comprises at least one third aperture for locating a sample in the first chamber region.

Aptly, the apparatus further comprises a main body portion in the housing between the first end wall and the second end wall and the at least one side wall.

Aptly, the main body portion comprises the first chamber region and the second chamber region.

Aptly, the main body portion comprises a threaded portion at the end of the first chamber region proximate the transparent window element.

Aptly, the apparatus further comprises a window support member that holds the transparent window element.

Aptly, the window support member comprises a threaded collar and a supporting wall for supporting the transparent window element extending inwardly from the threaded collar.

Aptly, the threaded collar is screwable to the threaded portion of the main body portion.

Aptly, at least one sealing element is located between the transparent window element and the window support member and/or between the transparent window element and the main body portion.

Aptly, the apparatus further comprises at least one insulating element located between the main body portion and the first end wall and/or the second end wall and/or the at least one side wall.

Aptly, the main body portion and/or the first end wall and/or the second wall and /or the at least one side wall is manufactured from a thermally conductive material, optionally a metallic material.

Aptly, the first chamber region comprises an open channel extending through a centre of the housing from the inner surface of the transparent window element to the second end wall.

According to a second aspect of the present invention there is provided use of the apparatus according to the first aspect of the present invention.

According to a third aspect of the present invention there is provided an optical microscopy system for optically inspecting a sample at cryogenic temperatures, comprising:
an optical microscope comprising a stage, at least one objective lens for collecting light from a sample, and at least one light source for illuminating the sample; and
the apparatus according to the first aspect of the present invention, located on the stage and for maintaining the sample, to be optically inspected via the optical microscope, at cryogenic temperatures.

Certain embodiments of the present invention provide apparatus for holding a sample to be inspected via an optical microscope and maintaining the sample at cryogenic temperatures (e.g., below -146 °C).

Certain embodiments of the present invention provide a signal-enhancing microscopy module for nanoscale imaging.

Certain embodiments of the present invention provide a controlled flow and temperature of dry gas across an outer surface of a window of a cryostage.

Certain embodiments of the present invention provide for the distribution of dry gas across an outer surface of a window to prevent condensation forming on the window during operation of a cryogenic light microscope.

Certain embodiments of the present invention provide for the targeted and/or directed and/or uniform distribution of dry gas across an outer surface of a window to prevent condensation forming on the window during operation of a cryogenic light microscope.

Certain embodiments of the present invention provide for the distribution of dry gas across an outer surface of a window to help the temperature of an external objective from significantly falling during operation of a cryogenic light microscope and thereby preventing fogging of the external objective.

Certain embodiments of the present invention help facilitate uninterrupted, high-quality optical imaging for performing precise scientific observations at cryogenic temperatures.

Certain embodiments of the present invention provide a cryogenic stage compatible with an inverted light microscope to allow for changing of objectives during operation of the microscope.

Certain embodiments of the present invention allow for the seamless switching between low and high magnification objectives during cryo-LM without the associated risks of condensation or contamination.

Certain embodiments of the present invention provide a method of using apparatus for holding a sample to be inspected via an optical microscope and maintaining the sample at cryogenic temperatures.

Certain embodiments of the present invention are capable of withstanding varying levels of ambient humidity or temperature without impacting its performance.

Certain embodiments of the present invention provide an optical microscopy system for inspecting a sample at cryogenic temperatures.

Certain embodiments of the present invention provide integration of cryogenic stage apparatus with an optical microscope to be user-friendly and effective, aligning with the operational needs of scientific research without disrupting the imaging process or sample integrity.

Certain embodiments of the present invention provide for an increased signal-to-noise ratio in fluorescence microscopy due to reduced photobleaching under cryogenic conditions.

Certain embodiments of the present invention provide for an add-on device for inverted microscopes, facilitating cryogenic imaging of vitrified samples.

Certain embodiments of the present invention provide a cryogenic device that seamlessly integrates with existing microscopy setups.

Certain embodiments of the present invention provide a self-contained module that can adapt standard fluorescence microscopes for cryogenic imaging.

Certain embodiments of the present invention enhance the duration and quality of cryogenic microscopy observations.

Certain embodiments of the present invention provide for a short cooling time during cryogenic light microscopy.

Certain embodiments of the present invention provide apparatus for effectively decoupling a window from the accumulation of condensation by preventing the ambient air from reaching the window area without compromising the holder's mechanical stability, thereby ensuring extended, high-quality imaging of unlimited duration.

Certain embodiments of the present invention provide for a directed stream of dry gas, which prevents objective cooling and ensures both objective safety from the accumulation of humidity and also from optical and mechanical disturbances.

Certain embodiments of the present invention provide apparatus that enables cryogenic correlated light and electron microscopy (CLEM).

Certain embodiments of the present invention provide apparatus that enables cryogenic fluorescence microscopy.

Embodiments of the present invention will now be described hereinafter, by way of example only, with reference to the accompanying drawings in which:
Figure 1 illustrates an optical microscopy system that includes an inverted optical microscope and apparatus for maintaining a sample at cryogenic temperatures;
Figure 2 illustrates a perspective view of the apparatus and objective lenses of the microscope mounted on an objective turret;
Figure 3 illustrates a side view, from a first direction, of the apparatus and objective lenses mounted on the objective turret;
Figure 4 illustrates an enlarged side view of part of the apparatus, as viewed from the first direction as for Figure 3;
Figure 5 illustrates a further enlarged side view of part of the apparatus, as viewed from a second direction orthogonal to the first direction of Figure 3;
Figure 6 illustrates a housing of the apparatus;
Figure 7 illustrates a cut-away side view of part of the apparatus;
Figure 8 illustrates a cut-away perspective view of part of the apparatus;
Figure 9 illustrates a window support member;
Figure 10 illustrates the cooling efficiency of the apparatus;
Figure 11 illustrates a sequence of images at different magnifications;
Figure 12 illustrates images, with dry gas flow turned respectively on and off;
Figure 13 illustrates a sequence of images with increasing time after turning on dry gas flow;
Figure 14 illustrates a sequence of images with increasing time while turning dry gas flow off and on repeatedly;
Figure 15 illustrates cryogenic fluorescence microscopy images of sub-diffraction nano-beads; and
Figure 16 illustrates the reduced photo-bleaching of fluorophores in cryogenic conditions compared to room-temperature conditions.

In the drawings like reference numerals refer to like parts.

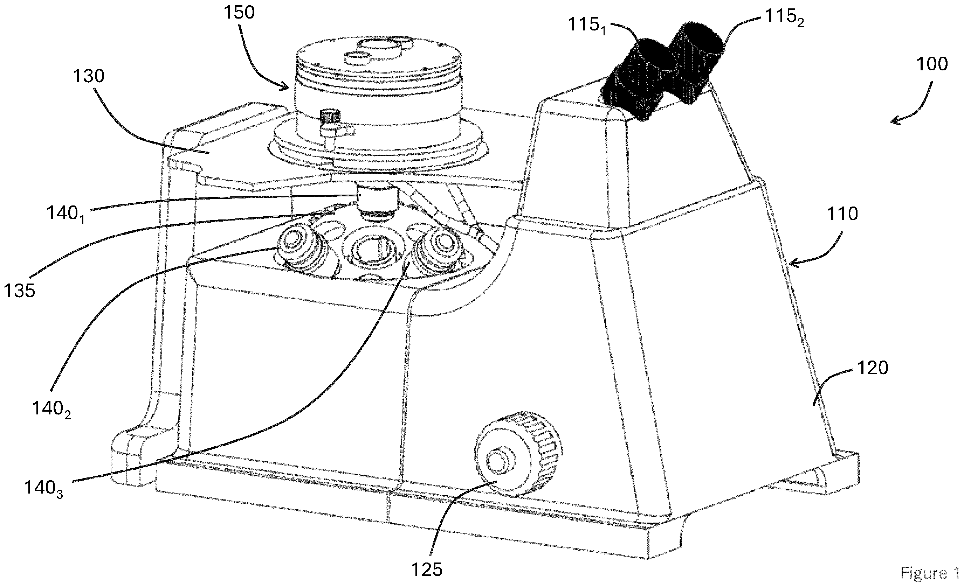

Figure 1 illustrates an optical microscopy system 100 in an inverted configuration. The optical microscopy system 100 may include an optical microscope 110. The optical microscope 110 includes a left eyepiece 115, and a right eyepiece 115₂ for viewing a magnified image of a sample. It will be appreciated that according to certain other embodiments there may be only one eyepiece 115, or at least one eyepiece 115. It will also be appreciated that according to certain other embodiments there may be no eyepiece(s) on the optical microscope 110 and instead a camera (such as a charge-coupled device, CCD) can be mounted directly in the optical pathway. The optical microscope 110 may include a casing 120 that may cover various internal components of the optical microscope 110, such as a light source (not shown) and other optical components (not shown) as will be appreciated by those of skill in the art. The optical microscope 110 further includes at least one focussing knob 125. The at least one focussing knob 125 may include controls for coarse and/or fine focussing adjustment, which may operate by adjusting a sample-objective distance by adjusting a height of a stage 130 of the optical microscope (i.e., along the z-axis) relative to an objective lens. According to certain other embodiments a height of an objective lens could be adjusted to change the sample-objective distance. Additionally or alternatively, the sample-objective distance may also be adjusted by motorised control. It will also be appreciated that according to certain other embodiments there could be no focussing knob and the focus control could be carried out entirely by motorised microscope control. The position of the stage 130 may be able to be adjusted within a plane defined by the stage 130 itself (i.e., in an x-y plane), such that an object or sample positioned on the stage 130 may be moved to a desired location within said plane. This adjustment of the stage in the x-y plane may also be achieved by knob(s) and/or motorised controls.

The optical microscope 110 also includes an objective turret 135, which may hold one or more objective lenses 140. In this case, the objective turret 135 holds three objective lenses 140, namely a first objective lens 140₁, a second objective lens 140₂, and a third objective lens 140₃. While three objective lenses 140 are shown, the objective turret 135 may include more or less objective lenses 140. It will be appreciated that the optical microscope 110 shown is in an inverted configuration due to the position of the objective lenses 140 below the stage 130. The objective turret 135 may be rotatable such that the objective lens 140 positioned in an imaging path may be changed. Each objective lens 140 may be characterised by a magnification and numerical aperture. Each objective lens 140 may provide a different magnification and/or numerical aperture, such that a sample being inspected may be imaged with a different magnification, by rotating the objective turret 135, while the sample remains mounted on the same optical microscopy system 100 and during a single imaging session.

Apparatus 150 may be mounted on the stage 130 of the optical microscope 110 to form the optical microscopy system 100. That is to say, apparatus 150 may be locatable on the stage 130 at a certain location on the stage 130. As will be described in the following, the apparatus 150 may be adapted to hold a sample to be optically inspected via the optical microscope 110 while maintaining the sample at cryogenic temperatures. It will be appreciated that cryogenic temperatures may refer to temperatures below -150 °C. It will be appreciated that optically inspecting a sample via the optical microscope 110 may involve imaging the sample using the optical microscope 110. The light source may illuminate the sample, such that reflected/transmitted/emitted light can be collected by the selected or chosen objective lens 140 and used to form a magnified image of the sample. Apparatus 150 may be removable from the optical microscope 110 and able to be integrated with other existing optical microscopes. The features of the apparatus 150 will be further described with reference to the following figures.

It will be appreciated that while the optical microscope 110 shown in Figure 1 is in an inverted configuration, according to certain other embodiments the optical microscope 110 may be configured in an upright configuration and the apparatus 150 may be adapted to work with the upright microscope. It will be appreciated that in an inverted configuration objective lens(es) may be positioned beneath a sample to be inspected, while in an upright configuration objective lens(es) may be positioned above a sample to be inspected.

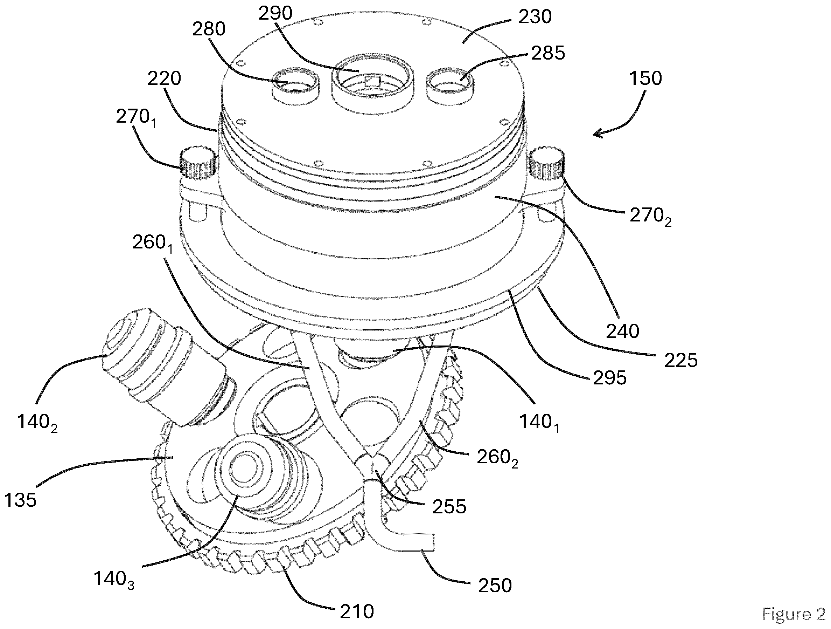

Figure 2 illustrates the apparatus 150, along with the objective turret 135 of the optical microscope 110. The objective turret includes the first objective lens 140₁, second objective lens 140₂, and third objective lens 140₃. Gear teeth 210 of the objective turret 135 allow for rotation of the objective turret 135 and selection of one of the objective lenses 140, by way of an internal mechanism of the optical microscope 110 interacting with the gear teeth 210. The apparatus 150 includes a housing 220 to contain internal components of the apparatus 150. The housing 220 may be formed of a single component or may be made up of different components fitted together. The housing 220 may be made from a thermally conductive material, such as metallic materials including copper, aluminium, or other metal alloys. It will be appreciated that different parts of the housing 220 may be made from the same or different materials and not all of the housing need be made from thermally conductive material. Thermally conductive may mean a thermal conductivity above 10 Wm⁻¹K⁻¹ and aptly, above 100 Wm⁻¹K⁻¹. It will be appreciated that materials with a lower thermal conductivity, such as plastics or the like, could also be used.

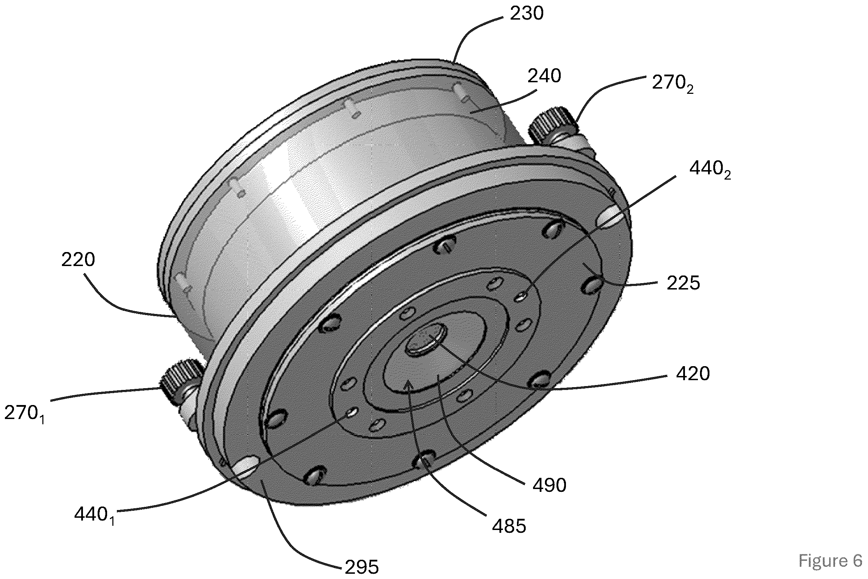

The housing 220 includes a first end wall 225 (more easily seen in Figure 6), a second end wall 230, and at least one side wall 240. The first end wall 225, second end wall 230, and at least one side wall 240 may be each formed of one component, or each may be made up of different components fitted together, for example including removable covers. The first end wall 225, second end wall 230, and at least one side wall 240 may each be substantially flat, may have flat regions and curved regions, or may be substantially curved. In the embodiment shown in Figure 2, the first end wall 225 is positioned on the bottom of the apparatus 150 and the second end wall 230 is positioned on the top of the apparatus 150. It will be appreciated that in the inverted configuration shown, the bottom of the apparatus 150 refers to the side nearer the objective turret 135 and the top of the apparatus 150 refers to the side further away from the objective turret 135. According to certain other embodiments, the first end wall 225 and second end wall 230 may be positioned differently relative to the objective turret 135. The housing 220 may form a cylindrical shape and the at least one side wall 240 may be a single curved side wall 240. According to certain other embodiments, the housing 220 may be in a different shape or geometry such as needed to fit the geometry of the optical microscope 110 that the apparatus 150 is to be integrated with. For example, the housing 220 may be in a cuboid shape, such that there are four side walls 230.

Also shown in Figure 2 is supply tubing 250. The supply tubing 250 is adapted to supply dry gas, such as nitrogen, compressed dry air (which aptly has been processed to remove moisture), or the like, to the apparatus 150. It will be appreciated that dry gas may refer to a gas with a moisture content of less than 10 parts per million (ppm). Aptly, dry gas may refer to a gas with a moisture content of less than 5 parts per million (ppm). A supply splitter 255 is located at a first end of the supply tubing 250, which may split the dry gas flow from the supply tubing 250 to a left supply tubing 260, and a right supply tubing 260₂. It will be appreciated that the supply tubing 250 may be connected to a supply of dry gas, for example a gas cylinder or lab supply line or the like, at a second end of the supply tubing 250. The supply tubing 250, supply splitter 255, left supply tubing 260₁ and right supply tubing 260₂ may be made from flexible and/or lightweight materials for example silicone or the like, in order to minimize the transfer of mechanical vibrations or disturbances. The left supply tubing 260₁ and right supply tubing 260₂ may direct the flow of dry gas to the housing 220 of the apparatus 150. It will be appreciated that according to certain other embodiments the supply tubing 250 may be split into one or more further supply tubing lines 260. It will be appreciated that the apparatus 150 may be supplied with dry gas by other means than the supply tubing 250 (e.g., rigid piping).

The apparatus 150 also includes a first vertical positioner 270₁, a second vertical positioner 270₂, and a third vertical positioner (not shown). The first vertical positioner 270₁, second vertical positioner 270₂, and third vertical positioner may be examples of adjustable elements.

The vertical positioners 270 enable the vertical height of the housing 220 to be adjusted relative to the stage 130 of the optical microscope 110. This may be achieved via the adjustable elements abutting a mount 295 of the apparatus 150. It will be appreciated that according to certain other embodiments there may be a different number or configuration of vertical positioners 270. The vertical positioners 270 include a knob to turn a screw that interacts with the mount 295 to adjust the vertical height of the housing 220. The vertical positioners 270 may be manually or electronically adjusted once it is positioned on the microscope stage. Manual adjustment may take the form of rotating the knob by hand, and electronic adjustment may use small motors, piezo controllers, or the like. It will be appreciated that according to certain other embodiments, vertical positioner(s) 270 may use a different mechanism to adjust the vertical height of the housing 220. The vertical positioners 270 may be used to set the vertical height of the housing 220 to match the geometry of the specific optical microscope 110 it is being used with, which may enable the apparatus 150 to be integrated with different types of optical microscope 110. In particular, the vertical positioners 270 may allow for adjustment when using an optical microscope 110 with limited vertical travel of the objective lenses 140, which may ensure that the objective lenses 140 can properly focus on the sample without physical constraints.

The apparatus 150 includes at least one cryogen liquid inlet 280. The cryogen liquid inlet 280 may take the form of an aperture that enables liquid cryogen to be provided to an interior region of the apparatus 150. This creates a controlled environment for ensuring that samples are kept at the necessary low temperatures for accurate cryogenic study. The cryogen liquid inlet 280 may be a circular aperture or may take a different shape. The cryogen liquid inlet(s) 280 may be at least one first aperture through the second end wall 230. It will be appreciated that liquid cryogen may refer to a liquified gas, with a boiling point at atmospheric pressure of below -100 °C, that enables a sample within the apparatus to be maintained at cryogenic temperatures. Aptly, liquid cryogen may refer to a liquified gas, with a boiling point at atmospheric pressure of below -150 °C. For example, a liquid cryogen may be liquid nitrogen or liquid helium. For example, the use of liquid nitrogen as the liquid cryogen may enable an interior region of the apparatus to be cooled to the boiling point of liquid nitrogen of approximately -195 °C, at atmospheric pressure. It will be appreciated that during use of the apparatus, the liquid cryogen will continuously boil off. An interior region of the apparatus, and a sample within the interior region, may be maintained at cryogenic temperatures by regular refill of the liquid cryogen from an external liquid cryogen source. The external liquid cryogen source may be a container that holds and supplies the liquid cryogen. The regular refill of the liquid cryogen through the cryogen liquid inlet 280 may be carried out by methods known in the art. For example, liquid cryogen may be manually poured through the cryogen liquid inlet 280 from the external cryogen source or a cryogen transfer vessel via a funnel, nozzle, or the like. For example, an automated system consisting of tubing and valves may enable automated and controlled transfer of liquid cryogen from the external cryogen source. The cryogen liquid inlet 280 may be left open during operation of the apparatus 150, or may have tubing connected leading to the external cryogen source, or may be closed during operation. It will be appreciated that if the cryogen liquid inlet 280 is closed during operation of the apparatus 150, by way of lid, plug, cap or the like, it may have to be periodically opened to allow for the regular refill of liquid cryogen and there may have to be a pressure relief valve located on the housing 220.

The apparatus 150 includes at least one cryogen level sensor interface 285. The cryogen level sensor interface 285 may take the form of an aperture that enables a level of liquid cryogen in an interior region of the apparatus 150 to be inspected. The cryogen level sensor interface 285 may be a circular aperture or may take a different shape. The cryogen level sensor interface(s) 285 may be at least one second aperture through the second end wall 230. It will be appreciated that inspecting a level of liquid cryogen is known in the art and the cryogen level sensor interface 285 may accommodate a sensing device or sensor designed to monitor the level of the cryogenic liquid within an interior region of the apparatus 150. For example, a sensing rod may be inserted into the cryogen level sensor interface 285 in order to inspect the level of liquid cryogen. For example, pt100 thermal sensors may be inserted into the cryogen level sensor interface 285 to inspect the level of liquid cryogen. Inspecting a level of liquid cryogen may take the form of optically inspecting the level of liquid cryogen. For example, a user of the apparatus 150 may manually look into the cryogen level sensor interface 285 to optically inspect the level of liquid cryogen. Inspecting the level of liquid cryogen may aid in controlling the supply and refill of liquid cryogen by providing real-time data on the cryogen level. The influx and maintenance of the liquid cryogen through the cryogen liquid inlet 280 may be governed by feedback from cryogen level sensors, accommodated through the cryogen level sensor interface 285, which can operate based on programmed schedules, manual activation, or automated refilling protocols. This may ensure that the internal temperature is kept constant by balancing the cryogen supply against its evaporation rate, thereby preventing overfilling. The cryogen liquid inlet 280 and cryogen level sensor interface 285 may be used to precool and maintain the cryogenic temperature of the apparatus 150 before loading a sample. The precooling may ensure a constant temperature within the apparatus 150 for optimal observation conditions. It will be appreciated that the cryogen liquid inlet 280 and cryogen level sensor interface 285 may also be used to cool the apparatus 150 with a sample already loaded and so cool the loaded sample at the same time as the apparatus 150.

It will be appreciated that a vitrified sample may refer to a sample that has been through a snap-freezing process for cryogenic preservation, as is known in the art. For example, standard cryogenic methods for preserving samples may include plunge freezing or high-pressure freezing for rapid cooling, which may be done with designated plunge freezers or high-pressure freezers. Plunge Freezing involves rapidly immersing biological samples in a cryogen (often liquid ethane cooled by liquid nitrogen) to instantly vitrify the water within the samples. Vitrification is the process of turning a substance into a glass-like solid without the formation of ice crystals, which can damage delicate cellular structures. High-pressure freezing is an advanced cryogenic technique where samples may be subjected to high pressure (around 2100 bar) while being rapidly cooled. This process also aims to vitrify the sample's water content, and is effective for thicker specimens where plunge freezing might not prevent ice crystal formation throughout the sample.

Samples in cryogenic imaging, particularly in the context of biological research, may be prepared in small amounts. This approach is useful for achieving quick and even cooling. When dealing with biological materials like proteins, viruses, bacteria, and non-adherent cells, these may be placed onto Electron Microscopy (EM) grids. For adherent cell cultures, these cultures may be grown directly on EM grids or on sapphire discs. This method may ensure that the biological samples are adequately supported while allowing for efficient cooling, which is important for preserving their structure and function at cryogenic temperatures. The prepared samples may then be rapidly cooled using one of the plunge freezing or high-pressure freezing methods mentioned above. Once vitrified, samples are stored in liquid nitrogen tanks at approximately -196°C until needed for further research.

The apparatus 150 includes at least one sample insertion port 290. The sample insertion port 290 may take the form of an aperture that enables locating a sample within an interior region of the apparatus 150. The sample insertion port 290 may be a circular aperture or may take a different shape. The sample insertion port(s) 290 may be at least one third aperture through the second end wall 230. The sample insertion port 290 enables the transfer of a vitrified sample to and from the apparatus 150 in order to conduct cryogenic microscopy. A sample may be inserted into an interior region of the apparatus 150 via the sample insertion port 290. The sample insertion port 290 may also be used as an interface for a light source for transmitted light microscopy, and/or for an additional top-mounted camera and/or an additional objective lens. The sample insertion port thus enables inspection of a sample from above (whereas as described below the window allows inspection of the sample from below). The sample insertion port 290 may allow light to enter and illuminate the sample from the top, which is used for transmitted light microscopy. It may also facilitate imaging the sample from the top position in light reflection mode. That is to say, the sample insertion port 290 may be used to enhance the apparatus 150 with additional functionalities, for integrating lighting and camera systems, while also considering the compatibility with various microscopy geometries. This adaptability ensures that the apparatus 150 can accommodate future advancements in imaging technology, providing a platform that remains relevant and valuable as microscopy techniques evolve. Moreover, the sample insertion port 290 supports the variability in microscopy devices, their builds, and geometries, as it provides a level of flexibility that ensures seamless integration across a wide array of microscopy systems. This consideration is useful, as it makes the apparatus 150 a versatile tool for a multitude of cryogenic microscopy applications on different microscopy units.

It will be appreciated that loading a vitrified or cryofixed sample through the sample insertion port 290 may involve loading the sample onto a pre-cooled cryogenic sample holder, to ensure the sample remains at cryogenic temperatures. During the sample transfer and loading process, it is important to keep the sample from devitrification and contamination by the air humidity. For example, a vitrified sample may be directly inserted into the apparatus 150 by putting the vitrified sample into a small amount of liquid nitrogen, or other liquid cryogen, and pouring it into the apparatus through sample insertion port 290. Upon evaporation of the liquid cryogen, the sample will be laying down on the glass and may be ready for imaging.

The apparatus 150 also includes a mount 295. The mount 295 may be adapted for locating the apparatus 150 on the stage 130 of the specific optical microscope 110. The shape of the mount 295 may be adapted for interacting with a specific area on the stage 130 and thus locating the apparatus 150 at a specific position on the stage 130. For example, the mount 295 may have a circular shape. According to certain other embodiments, the mount 295 may have a different shape, such as square or rectangular. The shape of the mount 295 may be adapted according to the shape of the stage of any specific make and model of optical microscope.

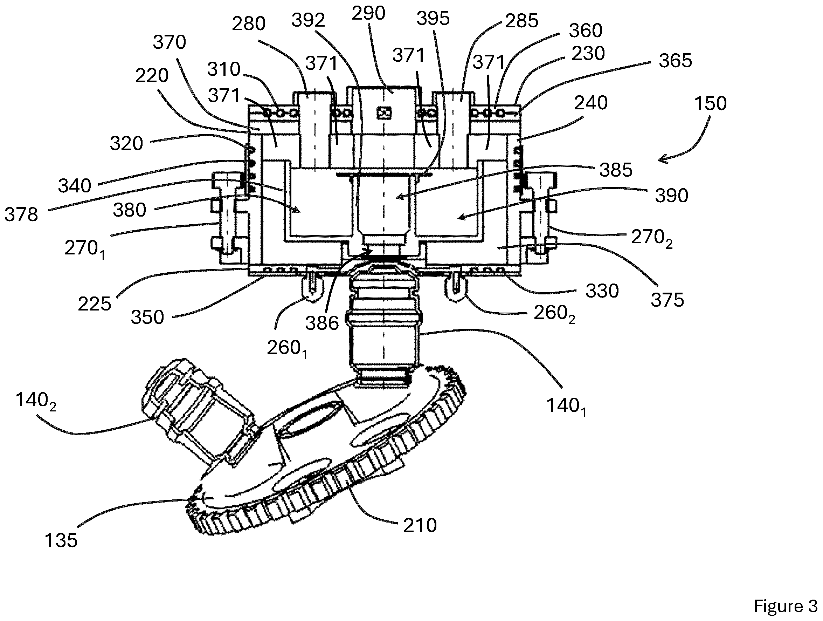

Figure 3 illustrates a cross-sectional view from a first side of the apparatus 150, along with the objective turret 135 of the optical microscope 110. As illustrated in Figure 3, the housing 220 includes an external heating system formed of various heating elements, including at least one top heating element 310 arranged within or beneath the second end wall 230, at least one side heating element 320 arranged within the at least one side wall 240, and at least one bottom heating element 330 arranged within or beneath the first end wall 225. The heating elements may be, for example, an array of heating wires, thin film heating elements or other forms of heating elements. The heating elements of the heating system may be electronically controlled in order to prevent cooling of the outside part of the housing 220 and to prevent ice formation on the outside part of the housing 220. In particular, the top heating elements 310 may prevent excessive cooling caused by the evaporating cryogen as it escapes from the cryogenic container during evaporation. This ensures optimal temperature control and enhances the overall efficiency of the system. The bottom heating elements 330 may be located at the base of the housing 220 and are important for regulating the temperature within the apparatus 150. The bottom heating elements 330 may provide targeted heat to counteract the extreme cold generated by the liquid cryogen, ensuring that the bottom area remains at a controlled temperature to prevent freezing or structural damage due to overcooling, for example of the stage 130.

It will be appreciated that electronic control of the heating elements of the heating system may be achieved through various methods including (but not limited to) Proportional-Integral-Derivative (PID) control systems, or the like. A PID control system may enable precise temperature regulation by automatically adjusting the electrical power supplied to the heating elements based on real-time feedback from temperature sensors. According to certain embodiments, temperature sensors may be integrated into the housing. The feedback mechanism may involve calculating the deviation from a desired temperature setpoint and dynamically altering the supplied electrical power to minimise this deviation. Such PID control may effectively maintain optimal operating temperatures and prevent overheating, thus enhancing the device's efficiency and safety. Alternatively, according to certain other embodiments, other temperature control methods (whether currently known or developed in the future) may be used to allow for flexibility in choosing the most appropriate temperature control methods based on the specific application needs and/or advancements in temperature control methods.

The at least one side wall 240 may include at least one side heating element cover 340 covering the at least one side heating element 320. The at least one side heating element cover 340 may protect the at least one side heating element 320 or protect a user from directly touching the at least one side heating element 320. The at least one side heating element cover 340 may be secured to the other parts of the at least one side wall 240 by way of screws or clips or the like.

The first end wall 225 may include a bottom heating element cover 350 covering the at least one bottom heating element 330. The bottom heating element cover 350 may protect the at least one bottom heating element 330 or protect a user from directly touching the at least one bottom heating element 330. The bottom heating element cover 350 may be secured to the other parts of the first end wall 225 by way of screws or clips or the like. The bottom heating element cover 350 may protect the at least one bottom heating element 330 while also helping to distribute the generated heat more evenly. The bottom heating element cover 350 may act as a barrier that minimizes heat loss and improves the efficiency of the heating system, ensuring that the desired temperature is maintained consistently across the first end wall 225.

The second end wall 230 may include an upper lid 360 and lower lid 365. The upper lid 360 and lower lid 365 may encapsulate the at least one top heating element 310. The upper lid 360 and lower lid 365 may protect the at least one top heating element 310 or protect a user from directly touching the at least one top heating element 310. The upper lid 360 and lower lid 365 may be secured together and/or with other parts of the second end wall 230 by way of screws, clips or other securing means.

The apparatus 150 includes at least one insulating element. For example, the apparatus 150 may include a first top insulation layer 370, a second top insulation layer 371, and bottom insulation 375. The first top insulation layer 370 and second top insulation layer 371 may provide thermal insulation to separate the second end wall 230 from contact with the cold gas evaporated from the liquid cryogen that constitutes the atmosphere within the apparatus 150. The bottom insulation 375 may have an annular portion adjacent to the at least one side wall 240 and a bottom portion adjacent to the first end wall 225. The bottom insulation may provide thermal insulation for the at least one side wall 240 and the first end wall 225. The first top insulation layer 370, second top insulation layer 371 and bottom insulation 375 may be made from a material with low thermal conductivity, or alternatively may be formed of a double walled evacuated layer to provide thermal insulation via a vacuum layer. For example, a material with thermal conductivity of less than 0.05 Wm⁻¹K⁻¹ may be used to form the first top insulation layer 370, second top insulation layer 371 and bottom insulation 375. Aptly, a material with thermal conductivity of less than 0.02 Wm⁻¹K⁻¹ may be used to form the top insulation 370, second top insulation layer 371 and bottom insulation 375. The top layers of insulation 370, 371 and the bottom insulation 375 surround a main body portion 378 (discussed in more detail below) where the liquid cryogen is held to help maintain cryogenic temperatures within the housing.

The apparatus 150 also includes a main body portion 378 within the housing 220. The main body portion 378 may be arranged between the first end wall 225 and the second end wall 230 and the at least one side wall 240. The main body portion 378 may be formed of a single component or may be made up of different components fitted together. The main body portion 378 may be made from a thermally conductive material, such as metallic materials including copper, aluminium, or other metal alloys. It will be appreciated that different parts of the main body portion 378 may be made from the same or different materials. These thermally conductive materials ensure efficient temperature management by facilitating thermal conductance through the walls of the main body portion 378, thereby maintaining stable cryogenic conditions for the sample. The main body portion 378 may serve as a container within the housing 220 adapted to hold the liquid cryogen and hold the sample, to be optically inspected via the optical microscope 110 and maintained at cryogenic temperatures. The main body portion 378 may take the form of two concentric annular walls and a base region. Alternatively, the concentric regions may take the form of nested squares or the like to conform with the shape of the housing 220.

In addition to the heating elements of the external heating system integrated into the walls of the housing 220 described above, a similar internal heating system may be integrated into the main body portion 378. This internal heating system may have its own dedicated feedback control mechanism, distinct/independent from the external heating system, to regulate the internal temperature precisely. Alternatively, the external and internal heating systems may be controlled via a single temperature control system. The incorporation of such an internal heating system may offer potential enhancements in device and temperature control. The design of this internal heating system may be adaptable, support various operational needs and future technological advancements.

The distinct external and internal heating systems may be enhanced to offer additional functionality in various ways. According to certain embodiments, advanced control algorithms may further optimise temperature regulation based on predictive analytics and real-time data processing and/or the integration of smart sensors within both heating systems may enable autonomous adjustments, enhancing the device's responsiveness to environmental changes and internal demands. According to certain other embodiments, modular heating components may be customised for specific applications, offering flexibility across different operational scales or requirements. Such modularity allows for easy adaptation to various industrial, medical, or research settings, where precise temperature control can sometimes be critical. Furthermore, emerging materials and energy sources may improve the efficiency and sustainability of the heating elements, for example using nanomaterials for enhanced heat conduction.

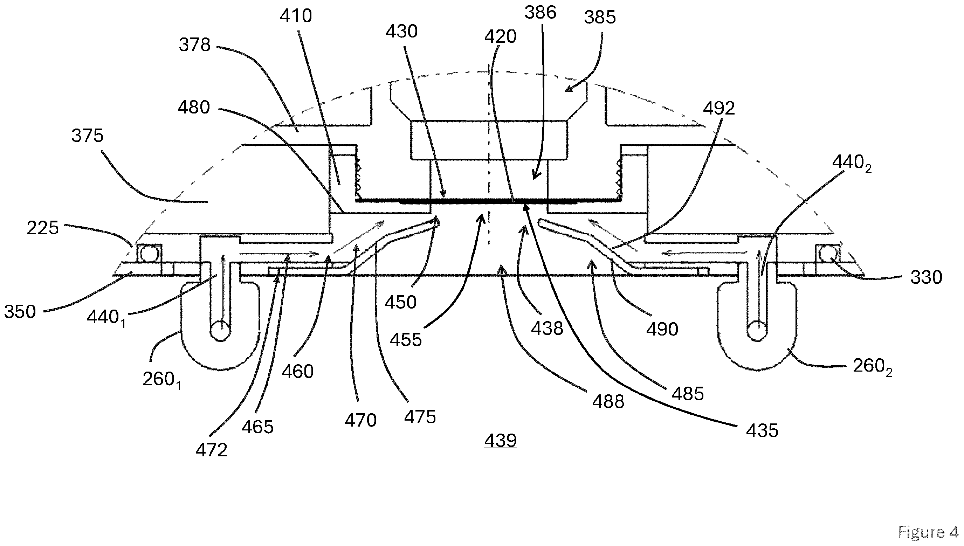

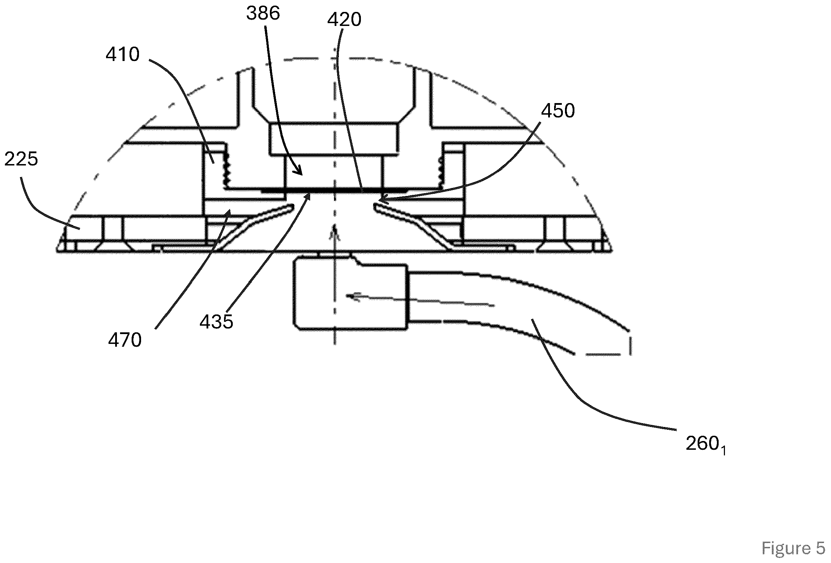

The interior region within the housing 220 provides an internal chamber 380 of the apparatus 150. The concentric annular wall regions of the main body portion 378 divide the internal chamber 380 into a first chamber region 385 and a second chamber region 390, where the first chamber region 385 is separated from the second chamber region by a dividing wall 392. The dividing wall 392 may be the inner wall of the two concentric annular walls of the main body portion 378. The dividing wall 392 may be substantially straight or may be at an angle inclined to the vertical. The first chamber region 385 may form a channel substantially in line with one of the at least one sample insertion port 290, such that the first chamber region 385 is designed to hold a sample after a sample is loaded through the sample insertion port 290. The sample may sit at the bottom of the first chamber region 385 in a sample region 386, for example within a sample holder, directly on a glass slide, or the like. The first chamber region 385 may be situated above the microscope objective lens 140₁, such that it can be optically inspected through a window (shown in more detail in Figures 4 and 5).

The second chamber region 390 may have a toroidal form and be located under the cryogen liquid inlet 280 and the cryogen level sensor interface 285. During operation of the apparatus 150, liquid cryogen may be filled through the cryogen liquid inlet 280 into the second chamber region 390 within the main body portion. The second chamber region 390 may hold a reservoir of liquid cryogen. The first chamber region 385 and second chamber region 390 may be in fluid communication by way of a top region of the internal chamber 380. That is to say, during operation of the apparatus 150, liquid cryogen evaporates from the reservoir of liquid cryogen in the second chamber region 390 and fills the remainder of the internal chamber 380 with cold cryogen gas, which can pass to the first chamber region 385. The cold cryogen gas may ensure that the internal chamber 380 is kept dry and moisture free by displacement of water vapour from the interior atmosphere. Alternatively, the internal chamber 380 may be evacuated by way of externally connected vacuum equipment prior to use such that water vapour is removed prior to use. Maintenance of the sample at cryogenic temperatures may occur by cooling via contact with the cold cryogen gas within the first chamber 385 and also by conductive heat transfer through the sample holder and walls of the main body portion 378. The liquid cryogen within the second chamber region 390 may absorb heat from the surrounding environment or from materials placed in proximity to it. As the liquid cryogen evaporates, it removes heat through the process of latent heat transfer, effectively lowering the temperature of the apparatus 150 and sample located within to cryogenic temperatures. This cooling is important for preserving biological samples, and enabling cryogenic microscopy where temperature control is required.

An anti-splash deflector 395 may be arranged at the top of the dividing wall 392. The anti-splash deflector 395 may take the form of an annular element protruding into the second chamber region 390. The anti-splash deflector 395 may have a hole or holes through its central portion such that fluid communication is ensured between the first chamber region 385 and second chamber region 390. The protruding part of the anti-splash deflector 395 may deflect small droplets of liquid cryogen that may escape from the boiling liquid cryogen. The droplets of liquid cryogen may otherwise pass from the second chamber region 390 to the first chamber region 385 and travel towards the sample along with the evaporated cryogen gas. These droplets typically contain ice crystal impurities and can contribute to sample contamination if they fall on the sample. By intercepting these droplets, the anti-splash deflector 395 may maintain the purity of the sample during cryogenic procedures.

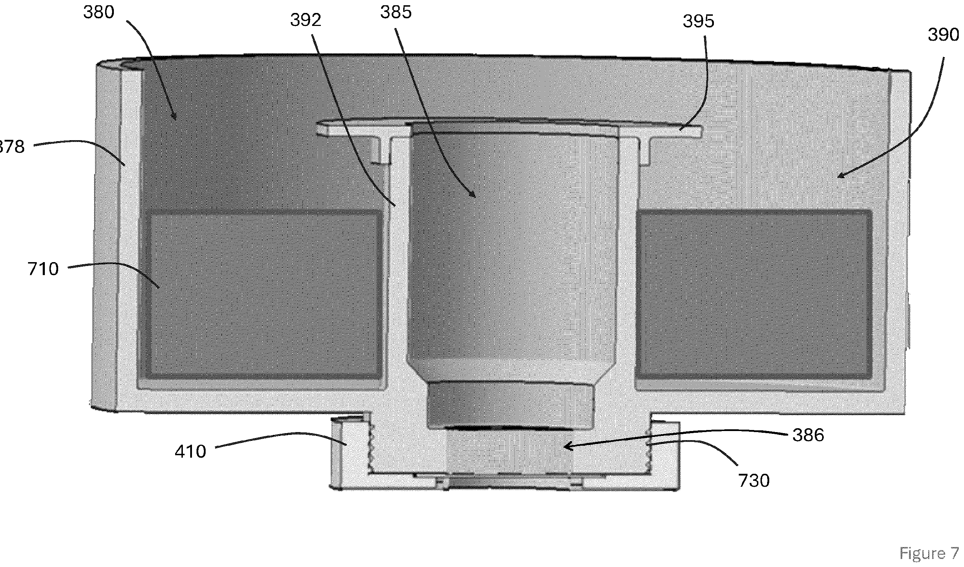

Figure 4 illustrates an enlarged cross-sectional view from the first side of the apparatus 150. The enlarged portion shown in Figure 4 is centred around the central portion of the first end wall 225. As described with reference to Figure 3, the sample may be located within the first chamber region 385. The main body portion 378 may have a threaded portion protruding from the base region (best seen in Figure 7) such that a window support member 410 may be secured by screwing it onto the main body portion. An aperture may extend through the base region where the threaded portion is located. Alternatively, the window support member may be integrally formed with the main body portion. The window support member 410 may support and hold a transparent window element 420. The transparent window element 420 may be made of glass, glass quartz or other optically transparent materials. The transparent window element 420 may enable optical inspection of the sample via the optical microscope 110. The transparent window element 420 may have an inner surface 430 and an outer surface 435. The inner surface 430 may face the first chamber region 385 in the interior of the housing 220. An aperture 438 extends through the first end wall 225, such that the outer surface 435 is exposed to an exterior environment 439 through the aperture 438 and a corresponding aperture in the window support member 410. It will be appreciated that the exterior environment 439 refers to the environment outside the housing 220. The aperture 438 may be circular or may have a different shape, such as square.

The transparent window element 420 may be secured by the window support member 410 in an airtight fashion by way of, for example, O-ring compression seals that utilize a deformable ring to fill gaps between mating surfaces formed by a surface of the window support member 410 and a surface of the main body portion 378. According to certain other embodiments, alternative securing mechanisms could be used including screw-down flanges with gaskets that employ compression via screws on a sandwiched gasket material. Alternatively, bayonet mounts with sealing rings rely on a locking mechanism with a sealing ring for a tight fit, magnetic flanges with sealing lips combine magnetic attraction with a compressed seal, clamping mechanisms with integrated seals utilize built-in seals for a tight fit when clamped, or vacuum seal flanges create an airtight seal by utilizing the external pressure following air removal from a designated channel. Possible materials for the construction of these flanges may include metals such as stainless steel, aluminium, and brass; engineering plastics like polycarbonate, ABS, and PEEK; composites for enhanced properties; ceramics for high-temperature resistance; and various surface treatments to enhance durability and performance. Additionally, materials for seals and gaskets may include silicone, rubber, and other specialized sealing compounds, tailored to meet specific environmental and functional requirements.

A first dry gas inlet 440₁ and second dry gas inlet 440₂ may be provided in an outer surface of the first end wall 225. According to certain other embodiments, there may be at least one dry gas inlet 440 and the at least one dry gas inlet 440 may be provided in any outer surface of the housing 220. The dry gas inlets 440 may be connectable to a supply of dry gas. The supply of dry gas may be via the dry gas supply tubing 260, described with reference to Figure 2. Alternatively, other means of dry gas supply, connectable to the dry gas inlets 440, may be used.

At least one opening 450 in the housing 220 may be located adjacent the outer surface 435 of the transparent window element 420. That is to say, the at least one opening 450 may be located on the side of the transparent window element 420 opposite the first chamber region 385 and exposed to the exterior environment 439. It will be appreciated that in the inverted configuration the at least one opening 450 may be (immediately) beneath the transparent window element 420 and in the upright configuration the at least one opening 450 may be (immediately) above the transparent window element 420. The at least one opening 450 may be disposed around a central portion 455 of the transparent window element 420. The at least one opening 450 may be arranged as a singular annular opening extending around all of the central portion 455 of the transparent window element 420, or the at least one opening 450 may be a singular opening extending around all of the central portion 455 in a different shape, such as square. According to certain other embodiments, the at least one opening 450 may be a plurality of openings disposed around the central portion 455 of the transparent window element 420, and the plurality of openings may be located in a rigid annular member. The at least one opening 450 may be provided as a gap between the outer surface 435 of the transparent window element 420 and the first end wall 225. According to certain other embodiments, the at least one opening 450 may be a perforated screen extending around all of the central portion 455 or the least one opening 450 may include at least one nozzle.

At least one fluid communication passageway 460 may be arranged within the housing 220. Aptly, at least part of the at least one fluid communication passageway 460 may be located within the first end wall 225. That is to say, at least part of the at least one fluid communication passageway 460 may be formed as a gap or cavity within the first end wall 225 or other part of the housing 220. The at least one fluid communication passageway 460 may connect the at least one dry gas inlet 440 to the at least one opening 450 to allow fluid, for example dry gas, to pass from the at least one dry gas inlet 440 to the at least one opening 450. The at least one fluid communication passageway 460 may enable distribution of dry gas across the outer surface 435 of the transparent window element 420, via the at least one opening 450, when dry gas is delivered to the at least one dry gas inlet 440. Aptly, dry gas may be distributed in a targeted/directed fashion and/or uniformly across the outer surface 435 of the transparent window element 420 by way of the configuration of the opening 450. That is to say, dry gas may be targeted/directed towards the outer surface 435 at an angle of between 10-75 degrees to the planar outer surface (i.e., relative to a plane aligned with the outer surface 435), thus helping to ensure that any residual air that may cause condensation on the window is effectively 'forced away' from the window. The distribution of dry gas may also be uniform in the sense that the dry gas approaches the outer surface of the window from multiple directions in a substantially uniform manner. This may help ensure that all parts of the central viewing portion of the window are prevented from accumulating condensation.

The at least one fluid communication passageway 460 may include a first passageway portion 465 and a second passageway portion 470. The first passageway portion 465 may be parallel to an outer surface region 472 of the first end wall 225 and may extend from the at least one dry gas inlet 440 to the second passageway portion 470. The outer surface region 472 may be substantially flat. Each of the at least one dry gas inlet 440 may have an associated first passageway portion 465, for example for two dry gas inlets 440 there may be two first passageway portions 465. The second passageway portion 470 may include an annular fluid containing space connecting the first passageway portion 465 to the at least one opening 450. That is to say, each of the first passageway portions 465, for example two first passageway portions 465, may connect to an annular fluid containing space of the second passageway portion 470. The second passageway portion 470 may include a lower fluid containing surface 475 and an upper fluid containing surface 480, with the annular fluid containing space being formed between the lower fluid containing surface 475 and upper fluid containing surface 480. The lower fluid containing surface 475 and upper fluid containing surface 480 may be configured such that a distance between the lower fluid containing surface 475 and upper fluid containing surface 480 continuously decreases in a direction towards the at least one opening 450. The configuration of the lower fluid containing surface 475 and/or upper fluid containing surface 480 may direct fluid flow such that dry gas is directed through the at least one opening 450 and towards the outer surface 435 of the transparent window element 420 at an angle of between 10-75 degrees relative to the outer surface 435 of the transparent window element 420, when dry gas is delivered to the at least one dry gas inlet 440. That is to say, dry gas may exit the at least one opening 450 at a shallow angle, for example between 10-75 degrees, relative to the outer surface 435 of the transparent window element 420 so that dry gas is distributed across the outer surface 435 of the transparent window element 420. Aptly, a targeted distribution of dry gas is delivered across the outer surface 435 of the transparent window element 420. Aptly, a directed distribution of dry gas is delivered across the outer surface 435 of the transparent window element 420. Aptly, a uniform distribution of dry gas is delivered across the outer surface 435 of the transparent window element 420.

Together the at least one opening and the second passageway portion may be referred to as a conical dry gas nozzle. This nozzle has been designed to prevent condensation and freezing on the glass window coverslip, to maintain specimen visibility in cryogenic microscopy. The nozzle receives dry nitrogen gas via the dry gas inlets and is engineered to distribute this gas evenly across the entire surface of the glass coverslip, not just from the directions corresponding to the dry gas inlets. This helps to ensure a targeted and/or directed and/or uniform application of dry gas, preventing localized freezing or condensation and keeping the coverslip window free from humidity. Such comprehensive distribution preserves the visibility of specimens during cooling, enabling high-quality imaging under cryogenic conditions, comparable to optical microscopy at room temperatures. Using this dry gas nozzle thus helps to keep the transparent window clear of condensation, independent of the optical objective's position. As a result, optical objectives can be freely changed during imaging sessions. This flexibility is a significant advancement over known cryostages, allowing for multi-focal imaging within a single cryogenic microscopy session-a capability not possible with previous designs in cryogenic microscopy. This greatly enhances the versatility and effectiveness of cryogenic imaging.

Alternative configurations to a conical nozzle that also prevent condensation on the transparent window and freezing may include:
Slotted Ring Manifold: For example, a ring-shaped channel that distributes dry gas across the window. Slots in the ring might ensure even distribution of heat to prevent cold spots and condensation.
Ring Plenum with Perforated Screen: For example, a ring-shaped chamber around the window with a perforated screen. Dry gas flows through the chamber and the screen, creating a gentle curtain to prevent condensation on the window.
Segmented Ring with Individual Nozzles: For example, a ring divided into sections, each with a nozzle that directs dry gas specifically towards areas prone to condensation.

Each of these designs can achieve targeted/directed dry gas, such as nitrogen, distribution across the transparent surface, enhancing cryogenic microscopy by maintaining clear and consistent specimen visibility.

The first end wall 225 may include a central recessed wall region 485. The central recessed wall region 485 may be sized and shaped for accommodating an end of each of the objective lenses 140 of the optical microscope 110. That is to say, an end of the chosen objective lens 140 may be able to fit within the central recessed wall region 485 such that a sample can be located at a working distance of the chosen objective lens 140 and an in-focus image can be captured using the chosen objective lens 140. The central recessed wall region 485 may be shaped such that the objective turret 135 can be rotated and the selected objective lens 140 can be changed such that images of different magnification can be captured. The aperture 438 through the first end wall 225 through which the outer surface 435 of the transparent window element 420 is exposed to the exterior environment 439 may be located at a centre 488 of the central recessed wall region 485. The centre 488 of the central recessed wall region 485 may be located substantially in-line with the centre of the first chamber region 385 such that a sample can be located within the first chamber region 385 and centred relative to the selected objective lens 140. The central recessed wall region 485 may include an outer surface portion 490 resembling an inner surface of a dome. That is to say, the central recessed wall region 485 may be shaped such that the outer surface portion 490 is dome-shaped. The lower fluid containing surface 475 of the second passageway portion 470 of the at least one fluid communication passageway 460 may be an inner surface 492 of the central recessed wall region 485. The upper fluid containing surface 480 may be a surface of the window support element 410 and/or the bottom insulation 375 and/or the main body portion 378 and/or the first end wall 225.

The apparatus 150 reduces condensation and freezing on the transparent window element 420, by way of the configuration of the at least one dry gas inlet 440, the fluid communication passageway 465 and the at least one opening 450. The reduction of condensation and freezing on the transparent window element 420 may maintain sample visibility during cryogenic microscopy. As previously discussed, the configuration of the at least one dry gas inlet 440, the fluid communication passageway 465 and the at least one opening 450 may enable dry gas, for example dry nitrogen gas, to be distributed across the outer surface 435 of the transparent window element 420. Aptly, dry gas may be distributed in a targeted/directed way across the outer surface 435 of the transparent window element 420. The distribution of dry gas may reduce localised freezing or condensation and reduce the humidity level at the outer surface 435 of the transparent window element 420. Such distribution of dry gas may help increase the visibility of samples while a sample is maintained at cryogenic temperatures, enabling high-quality imaging under cryogenic conditions, comparable to optical microscopy at room temperatures. The reduction of condensation level at the outer surface 435 of the transparent window element 420 may be independent of the position of the objective lens 140, due to the configuration of the opening 450 in the housing 225. As a result, objective lenses 140 can be changed during imaging sessions. This flexibility allows for multi-focal imaging within a single cryogenic microscopy session, which enhances the versatility and effectiveness of cryogenic imaging.

According to certain other embodiments, the fluid communication passageway 465 may include a ring-shaped channel that distributes dry gas across the outer surface 435 of the transparent window element 420 via the at least one opening 450, which may be formed as slots in the ring. Alternatively, the fluid communication passageway 465 may include a ring-shaped chamber with the at least one opening 450 formed as a perforated screen. Alternatively, the fluid communication passageway 465 may include a ring-shaped chamber with the at least one opening 450 formed as at least one nozzle that directs dry gas specifically towards areas prone to condensation.

Figure 5 illustrates a second enlarged cross-sectional view of part of the apparatus 150, viewed from a second side of the apparatus 150. The second side of the apparatus 150 is orthogonal to the first side view as in Figure 4. As described with reference to the preceding figures, the left dry gas supply tubing 260₁ may deliver dry gas to the at least one dry gas inlet 440 (not shown). The at least one opening 450 may distribute dry gas across the outer surface 435 of the transparent window element 420. The second passageway portion 470 of the fluid communication passageway 460 may take the form of an annular fluid containing space within the first end wall 225.

Figure 6 illustrates the housing 220 of the apparatus 150 from a perspective view. The housing 220 includes a first end wall 225, a second end wall 230 and at least one side wall 240. The first end wall 225 may have a substantially flat portion and may also include at least one curved region, such as the central recessed wall region 485. Whilst the first end wall may include multiple components connected together, the first end wall 225 is considered to include all portions of the housing that face an exterior environment below the housing 220 (apart from the window and the mount). Figure 6 also helps to illustrate how securing element are used to secure the first end wall 225 and second end wall 230 to the side wall 240 of the housing 220.

Figure 7 illustrates a cross-sectional view of part of the apparatus 150. The main body portion 378 is shown along with the window support member 410, isolated from the housing 220 and other parts of the apparatus 150. As described with reference to the preceding figures, the main body portion 378 may include two concentric walls and a base, where the walls may be for example in an annular form. The inner wall forms the dividing wall 392 that divides the internal chamber 380 into a first chamber region 385 and a second chamber region 390. The first chamber region 385 may be an open channel extending through the centre of the housing 220 from the inner surface 430 of the transparent window element 420 to the second end wall 230. The second chamber region 390 may have a toroidal shape, or be an annular channel extending around the first chamber region 385. The first chamber region 385 may be adapted to locate a sample to be inspected with the optical microscope 110 and the second chamber region 390 may hold a reservoir of liquid cryogen 710. The sample may sit at the bottom of the first chamber region 385 in the sample region 386, for example within a sample holder, directly on a glass slide or the like. The first chamber region 385 and second chamber region 390 may be in fluid communication such that evaporated cryogen gas from the reservoir of liquid cryogen 710 may fill the first chamber region 385 to provide a dry environment and provide cooling to a sample. The anti-splash deflector 395 may have a part protruding into the second chamber region 390 to deflect small droplets of liquid cryogen that may escape from the boiling liquid cryogen. The window support member 410 may be secured onto the main body portion 378 by a threaded portion 730 of the main body portion 378. The threaded portion may be a protruding portion at a centre of the base region of the main body portion 378. Alternatively, other securing means may be used for securing the window support member 410 to the main body portion 378 or they may be integrally formed. An aperture through the main body portion 378 and window support member 410 may be substantially aligned with the aperture 438 through the first end wall 225 (not shown) such that the outer surface 435 of the transparent window element 420 may be exposed to the exterior environment.

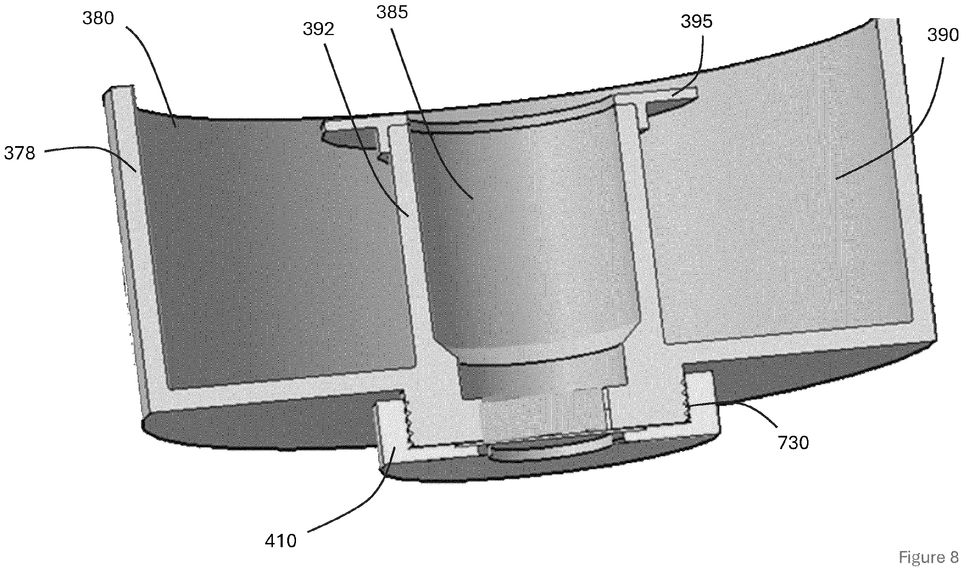

Figure 8 illustrates a perspective cut-away view of the part of the apparatus 150 as shown in Figure 7. As described with reference to Figure 7, the main body portion 378 is shown along with the window support member 410, isolated from the housing 220 and other parts of the apparatus 150.

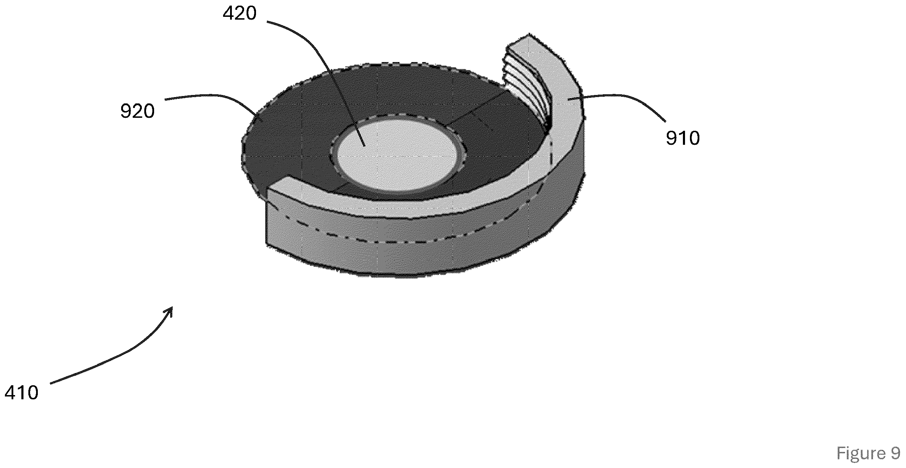

Figure 9 illustrates the window support member 410. The window support member 410 may support and hold a transparent window element 420. The transparent window element 420 may be made of glass, glass quartz or other optically transparent materials. The transparent window element 420 may enable optical inspection of the sample via the optical microscope 110. The window support member 410 may have a threaded collar 910 that is able to be screwed, or is screwable, onto the threaded portion 730 of the main body portion 378 to secure the window support member 410 in place. A supporting wall 920 may extend inwardly from the threaded collar 910. The supporting wall 920 may have an aperture that is substantially aligned with the aperture 438 in the first end wall 225 when the window support member 410 is secured onto the main body portion 378 and installed in the housing 220. The supporting wall 920 may support the transparent window element 420, such that the outer surface 435 of the transparent window element 420 may be exposed to the exterior environment 439. At least one sealing element may be located between the transparent window element 420 and the window support member 410 and/or between the transparent window element 420 and the main body portion 378. The at least one sealing element may be, for example, O-ring compression seals that utilize a deformable ring to fill gaps between mating surfaces. The at least one sealing element may be sealed upon securing the window support member 410, with transparent window element 420 installed, onto the main body portion 378 and may provide an airtight seal such that fluids, including the cryogen gas filling the first chamber region 385 cannot escape the internal chamber 380 through the aperture 438 of the first end wall 225.

The workflow of the apparatus 150 may first involve positioning the apparatus 150 on the optical microscope 110. The dry gas supply tubing 250 may then be connected to the dry gas supply splitter 255 to the left and right dry gas supply tubing 260. The dry gas supply tubing may be connected to the at least one dry gas inlet 440. The dry gas supply may then be started. Aptly, the dry gas may be dry nitrogen gas. The heating system may then be connected to a power supply and turned on such that the heating elements are powered. Aptly, the heating elements may include at least one top heating element 310, at least one side heating element 320 and at least one bottom heating element 330. One of the objective lens 140, for example 5x magnification, may then be focussed on the transparent window element 420. The focussing may be performed manually or may be achieved automatically using motorised focus control, as is known in the art. This may ensure that the focus will be near the sample, once it is loaded. The second chamber region 390 may then be filled with liquid cryogen, via the cryogen liquid inlet 280. The filling with liquid cryogen may be achieved manually or may use an automated system. Aptly, the liquid cryogen may be liquid nitrogen. The first chamber region 385 may then cool down to cryogenic temperatures. A vitrified sample may then be loaded into the first chamber region 385, via the sample insertion port 290. Alternatively, a room temperature sample may be loaded into the first chamber region 385 and cooled by the liquid cryogen. One of the objective lens 140, for example 5x magnification, may then be focussed on the sample and the sample may be optically inspected or imaged at low magnification. Due to the low magnification, this step may be fast but may give a good insight in the sample quality and also helps in quick identification of regions of interests. When the positions of the regions of interest are identified, then a different one of the objective lenses 140, of higher magnification, may be chosen based on the needs of the study. If a further change of the sample position is required during the experiment, such as in cases when other regions of interests need to be inspected, then different objective lenses can be exchanged as needed, while maintaining the sample at cryogenic temperatures.

Whilst the apparatus 150 has so far been described in conjunction with its use with an inverted optical microscope, it will be appreciated that the apparatus may have an overall similar structure if used with an upright optical microscope. However, if used with an upright microscope, the apparatus would be modified so that the sample sits on an elevated sample holder such that it sits at the top of the first chamber region 385. Additionally, a window through which the sample is inspected may be placed through the sample insertion port 290 (after insertion of the sample) and located in a channel coaxial with the sample insertion port 290. It will be appreciated that certain dry gas delivery components, including at least one dry gas inlet 440, at least one opening 450, and at least one fluid communication passageway 460, may also be provided to deliver gas across the outer surface of such a top-mounted transparent window element 420. Alternatively, transparent window elements 420, and associated dry gas delivery components, may be provided on both sides of the housing 220 to allow for optical inspection from both sides of a sample. According to certain other embodiments, there may be at least one side port in the at least one side wall 240 to allow for a sample to be loaded from the side of the apparatus 150.

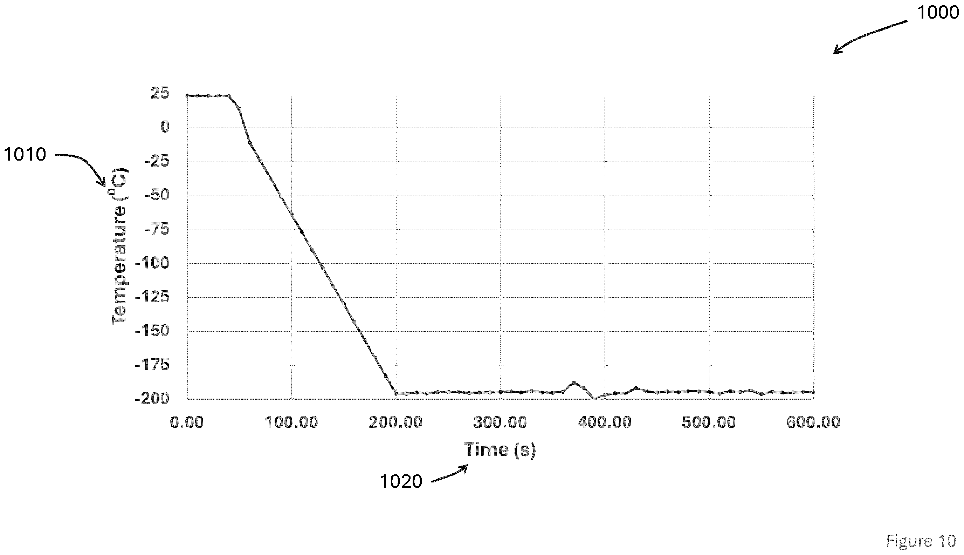

Figure 10 illustrates data showing the cooling efficiency of the apparatus 150 when filled with liquid cryogen, starting from the apparatus at room or ambient temperature. A graph 1000 shows a temperature 1010 of the first chamber region 385 with time 1020 after filling the reservoir of liquid cryogen 710, using liquid nitrogen, in the second chamber region 390. A sample may be loaded into the apparatus 150 while cooling, or the apparatus 150 may be pre-cooled prior to loading a vitrified sample. The graph 1000 shows that the apparatus 150 requires approximately 3 minutes to reach the base temperature of approximately -195 °C. Data was collected by attaching a T-type thermocouple probe to the first chamber region 385 within the apparatus 150. It will be appreciated that a K-type thermocouple may also be used to measure the temperature.

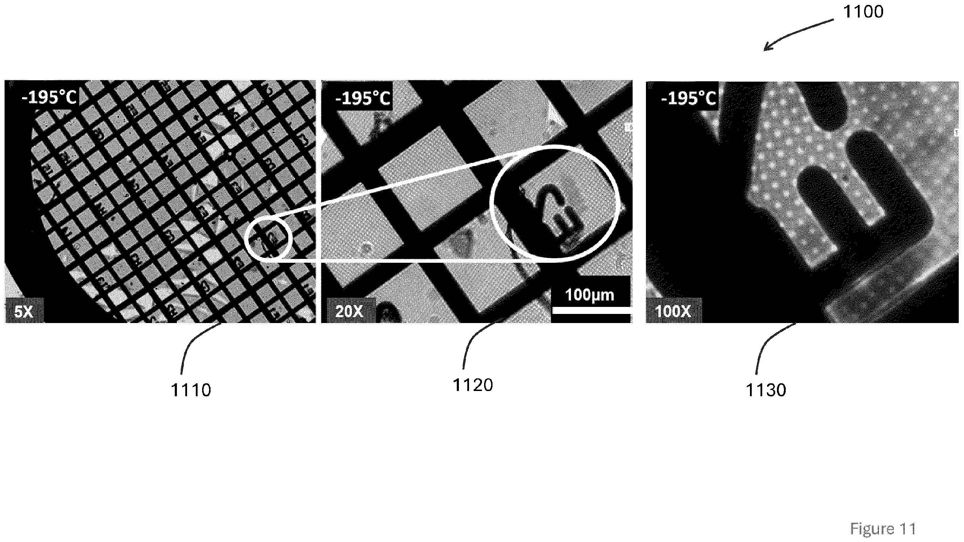

Figure 11 illustrates a sequence of images 1100 taken at different magnifications whilst the sample was held within apparatus 150. The sequence of images 1100 are of the same sample, a cryo-EM grid with pre-marked positions, under cryogenic conditions of a temperature of - 195 °C. The images are taken by changing the objective lens 140 between different objective lenses 140 with different magnification during an imaging session using the optical microscope 110 in an inverted configuration, while maintaining the sample at cryogenic temperatures. A first image 1110 is taken at 5x magnification, a second image 1120 is taken at 20x magnification, and a third image 1130 is taken at 100x magnification, highlighting the ability of the apparatus 150 to allow for interchangeability of the objective lens 140. The images are recorded with an Olympus XM10 camera. The images were captured with the exterior environment 439 having a temperature of 25°C and 78% relative ambient humidity, highlighting the robustness of the apparatus 150 to a variety of environmental conditions.

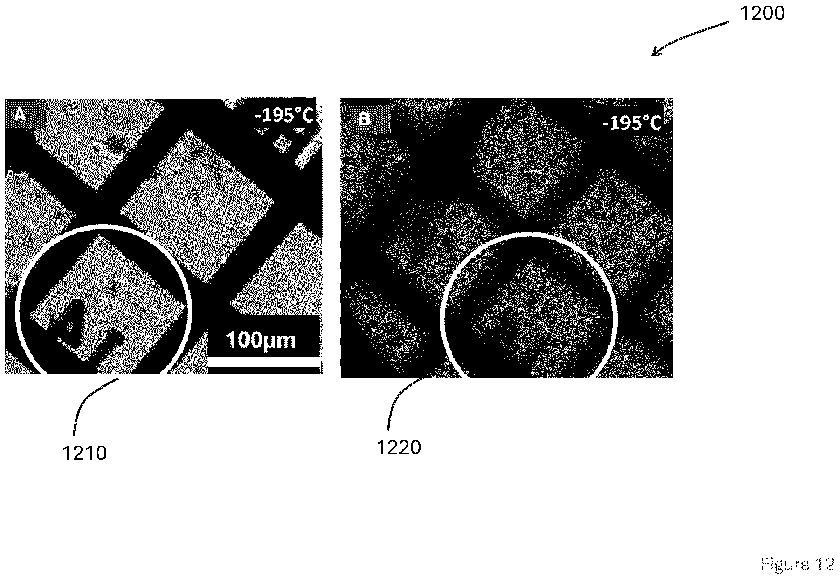

Figure 12 illustrates the condensation protection of the apparatus 150, by images with the dry gas supply turned on and off 1200. A first image 1210 has the dry gas supply turned on, with a sample of cryogenic EM grid maintained at a cryogenic temperature of -195 °C. The second image 1220 has the dry gas supply turned off, with the sample of cryogenic EM grid maintained at the cryogenic temperature of -195 °C. The images are taken via the objective lens 140 through the transparent window element 420. The first image 1210 shows the crisp, clear image that can be achieved, indicative of optimal performance of the apparatus 150, when the dry gas supply is turned on and the condensation protection is activated. The second image 1220 shows the obscured image produced when the dry gas supply is turned off and condensation therefore builds up within seconds on the outer surface 435 of the transparent window element 420. This contrast highlights the efficacy of the condensation protection of the apparatus 150 in maintaining image clarity against ambient humidity challenges. The images are recorded on the optical microscope 110 in an inverted configuration with an Olympus XM10 camera with 20X Olympus air immersion objective.

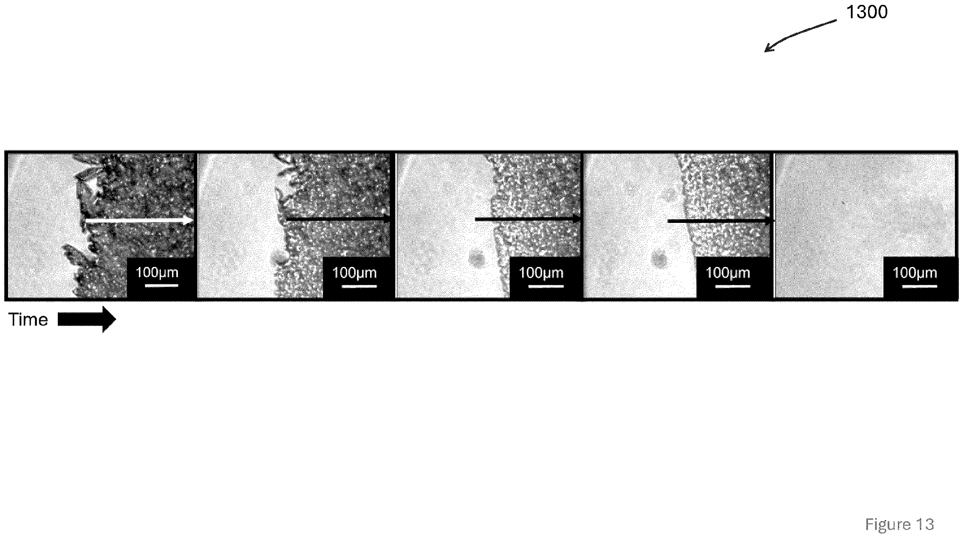

Figure 13 illustrates a sequence of images with increasing time after turning on dry gas supply 1300. In this time-lapse sequence, the de-icing capability of the apparatus 150 is visualised through a sequence of images. Starting with a heavily obscured window, an arrow indicates the direction of the retracting ice. After dry gas supply is activated, the ice layer retreats quickly, resulting in a clear window within just a few seconds. The final panel shows a fully transparent window, enabling unimpeded high-resolution observation with a 20X Olympus air immersion objective on the optical microscope 110 in an inverted configuration, documented by the Olympus XM10 camera. Dry gas supply with the apparatus 150 may both reduce the build-up of condensation on the outer surface 435 of the transparent window element 420 and may also remove condensation on the outer surface 435 of the transparent window element 420 once it has built up.

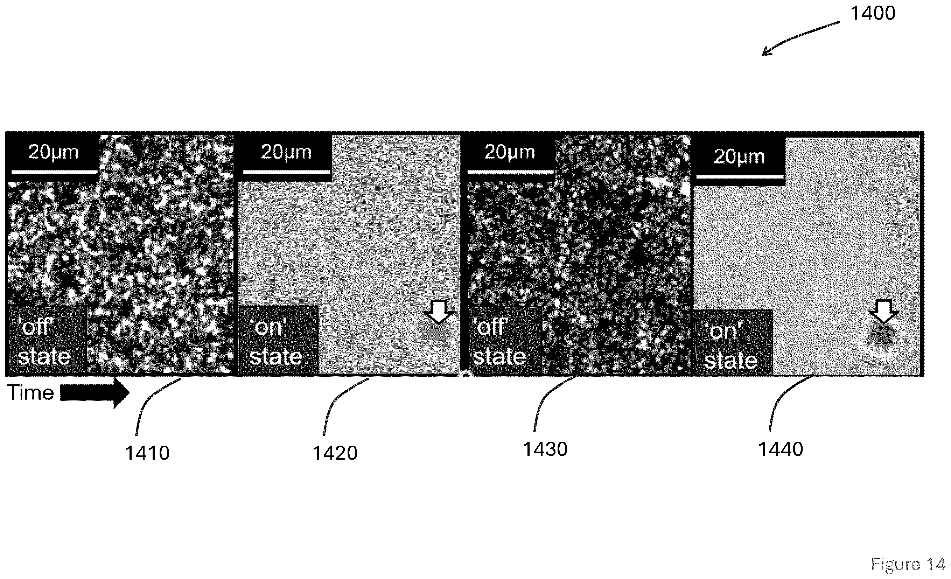

Figure 14 illustrates a sequence of images with increasing time while turning dry gas flow off and on repeatedly 1400. The images are captured with a 20X Olympus air immersion objective on the optical microscope 110 in an inverted configuration, documented by the Olympus XM10 camera. A first image 1410 has dry gas supply turned off, a second image 1420 has dry gas supply turned on, a third image 1430 has dry gas supply turned off, and a fourth image 1440 has dry gas supply turned on. The images show that the dry gas supply can be repeatedly turned off and on to remove condensation build up on the outer surface 435 of the transparent window element 420 each time dry gas supply is turned on. White arrows in the cleared state of the second image 1420 and fourth image 1440 point to an impurity on the glass, noticeable only once the condensation is removed. The rapid efficacy of the dry gas supply is evidenced in the transition from an opaque to a transparent window, even while the exterior environment 439 has a temperature of 25°C and high 78% humidity.

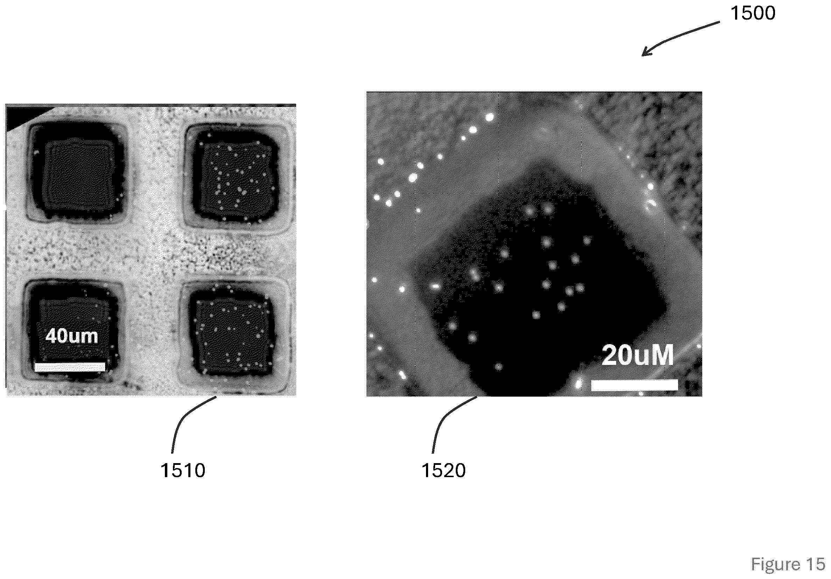

Figure 15 illustrates cryogenic fluorescence microscopy images 1500 of sub-diffraction nano-beads (Floresbright Multispeck 200nm beads) at two different magnifications using the apparatus 150. A first image 1510 has 20x magnification, and a second image 1520 has 40x magnification. The fluorescent particles in the images are sub-diffraction nano-beads (Floresbright Multispeck 200nm beads). The images highlight how the apparatus 150 allows for high-resolution cryogenic fluorescence microscopy to be performed.

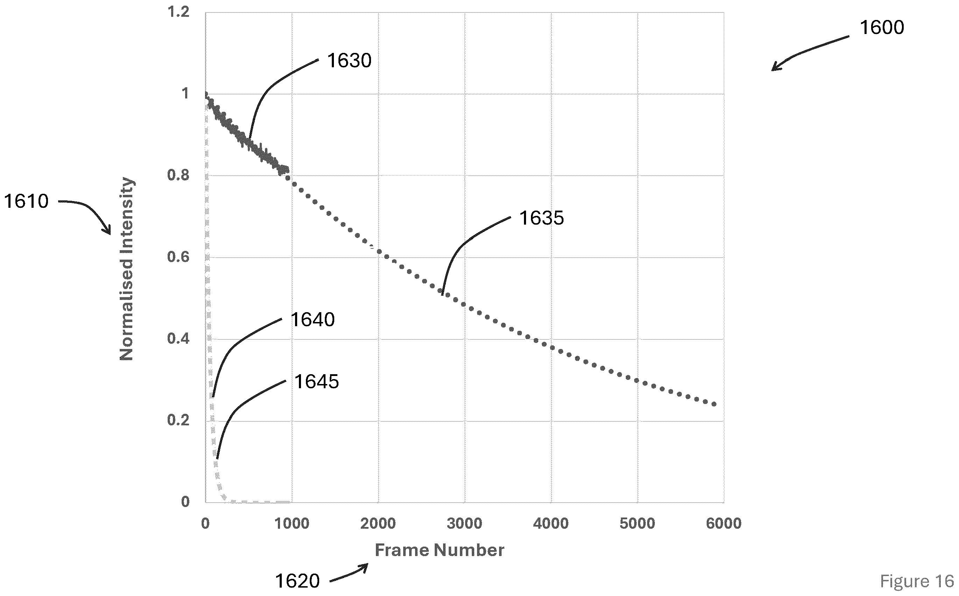

Figure 16 illustrates the reduced photo-bleaching of fluorophores under cryogenic conditions. A graph 1600 shows a normalised fluorescence intensity 1610 of STYO 9 fluorophores with frame number 1620 in both cryogenic conditions and room-temperature conditions. The normalised intensity of fluorophores at a cryogenic temperature of -195 °C is shown by a first data set 1630, with a first exponential fit 1635 to the first data set 1630. The normalised intensity of fluorophores at room temperature of 25 °C is shown by a second data set 1640, with a second exponential fit 1645 to the second data set 1640. The first exponential fit 1635 has an exponential decay half-life of approximately 3000 frames whereas the second exponential fit 1645 has an exponential decay half-life of approximately 30 frames. The fluorophores at cryogenic temperatures therefore have approximately 100 times lower rate of photo-bleaching than at room temperature and hence the cryogenic fluorescence microscopy enabled by the apparatus 150 may allow for increased signal-to-noise ratio as described previously.

Having described the above, it will be appreciated that certain embodiments of the present invention provide:
Specialized Gas Distribution: A specially designed mechanism targets dry gas such as nitrogen across the entire surface of a glass window. This design prevents humid air from reaching the cold surface of the window, thereby ensuring no condensation forms that could obstruct the optical path.
Thermal Buffering: By maintaining a controlled flow and temperature of the dry gas, an effective thermal buffer is provided around sensitive optical components, particularly the microscope objective. This prevents the objective from cooling excessively and eliminates the risk of fogging, which can be a significant issue in cryogenic microscopy.
Seamless Integration: Integration into cryogenic microscopy setups is tailored to be user-friendly and effective, aligning with the operational needs of scientific research without disrupting the imaging process or sample integrity. This solution significantly facilitates the use of numerous high-end inverted microscopes for cryogenic microscopy, thereby enhancing the quality of cryogenic imaging.
Enhanced Imaging Clarity: Ensuring the glass window remains clear of condensation, facilitating uninterrupted, high-quality imaging crucial for precise scientific observations at cryogenic temperatures.
Seamless Objective Switching and Multi-Focal Imaging: Ability to support multi-focal imaging within a single cryogenic imaging session. The system allows for the seamless switching between low and high magnification objectives without the associated risks of condensation or contamination.
Ambient Humidity-Resistant Performance: The system is capable to withstand varying levels of ambient humidity without impacting its performance. Cryogenic microscopy typically requires environments with controlled humidity. This control helps prevent the formation of ice crystals on the samples during imaging, which can distort the microscopic images and damage the sample. For example, for cryogenic electron microscopy, recommended humidity level is ideally 15% relative humidity or lower. However, dryness of the ambient air might be uncomfortable to the users. The specialized design of our system provides consistent results across various experimental conditions such as room temperature and humidity.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. Apparatus locatable on a stage of an optical microscope for holding a sample to be optically inspected via the optical microscope and maintaining the sample at cryogenic temperatures, comprising:
a housing comprising a first end wall, a second end wall, spaced apart from the first end wall, and at least one side wall extending between the first end wall and the second end wall;
an internal chamber in the housing comprising a first chamber region, for locating a sample to be optically inspected via an optical microscope, and a second chamber region, in fluid communication with the first chamber region, for holding a reservoir of liquid cryogen;
a transparent window element in the housing for allowing a sample in the first chamber region to be optically inspected via an optical microscope and comprising an inner surface, facing the first chamber region, and an outer surface that is exposed to an exterior environment via an aperture that extends through the first end wall;
at least one dry gas inlet at an outer surface of the housing, connectable to a supply of dry gas;
at least one opening in the housing located adjacent the outer surface of the transparent window element and disposed around a central portion of the transparent window element; and
at least one fluid communication passageway in the housing connecting the at least one dry gas inlet to the at least one opening for enabling distribution of dry gas across the outer surface of the transparent window element when dry gas is delivered to the at least one dry gas inlet.

2. The apparatus as claimed in claim 1, wherein:
the at least one opening is formed as a gap between the outer surface of the transparent window element and the first end wall.

3. The apparatus as claimed in claim 1 or claim 2, wherein:
the at least one opening comprises a singular opening extending around all of the central portion of the transparent window element or a plurality of openings disposed around the central portion of the transparent window element such that a targeted distribution of dry gas is provided across the outer surface of the transparent window element when dry gas is delivered to the at least one dry gas inlet.

4. The apparatus as claimed in any preceding claim, wherein:
the at least one opening comprises a single annular opening extending around all of the central portion of the transparent window element; or
the at least one opening comprises a plurality of openings disposed around the central portion of the transparent window element and located in a rigid annular member; or
the at least one opening comprises a perforated screen extending around all of the central portion of the transparent window element; or
the at least one opening comprises at least one nozzle disposed around the central portion of the transparent window element and located in a rigid annular member.

5. The apparatus as claimed in any preceding claim, wherein:
at least part of the at least one fluid communication passageway is located in the first end wall.

6. The apparatus as claimed in any preceding claim, wherein:
the at least one fluid communication passageway comprises a first passageway portion and a second passageway portion,
the first passageway portion being parallel to an outer surface region of the first end wall and extending from the at least one dry gas inlet to the second passageway portion,
the second passageway portion comprising an annular fluid containing space connecting the first passageway portion to the at least one opening.

7. The apparatus as claimed in claim 6, wherein:
the second passageway portion comprises an upper and lower fluid containing surface, wherein a distance between the upper and lower fluid containing surface continuously decreases in a direction towards the at least one opening.

8. The apparatus as claimed in claim 7, wherein:
the lower fluid containing surface directs fluid flow such that dry gas is directed through the at least one opening and towards the outer surface of the transparent window element at an angle of between 10-75 degrees relative to the outer surface of the transparent window element when dry gas is delivered to the at least one dry gas inlet.

9. The apparatus as claimed in any preceding claim, wherein:
the first end wall comprises a central recessed wall region that is sized and shaped for accommodating an end of an objective lens of an optical microscope.

10. The apparatus as claimed in claim 9, wherein:
a centre of the central recessed wall region comprises the aperture through the first end wall through which the outer surface of the transparent window element is exposed to the exterior environment.

11. The apparatus as claimed in claim 9 or claim 10, wherein:
the central recessed wall region comprises an outer surface portion resembling an inner surface of a dome.

12. The apparatus as claimed in any one of claims 9 to 11, wherein:
a lower fluid containing surface of a second passageway portion of the at least one fluid communication passageway is an inner surface of the central recessed wall region.

13. The apparatus as claimed in any preceding claim, wherein:
the at least one dry gas inlet is located in the first end wall.

14. Use of the apparatus as claimed in any one of claims 1 to 13.

15. An optical microscopy system for optically inspecting a sample at cryogenic temperatures, comprising:
an optical microscope comprising a stage, at least one objective lens for collecting light from a sample, and at least one light source for illuminating the sample; and
the apparatus as claimed in any one of claims 1 to 13, located on the stage and for maintaining the sample, to be optically inspected via the optical microscope, at cryogenic temperatures.
